(19) Europäisches Patentamt
European Patent Office
Office européen des brevets

(11) **EP 4 318 338 B1**

(12) **EUROPEAN PATENT SPECIFICATION**

(45) Date of publication and mention
of the grant of the patent:
**10.06.2026  Bulletin 2026/24**

(21) Application number: **22794675.3**

(22) Date of filing: **19.04.2022**

(51) International Patent Classification (IPC):
***G06N 3/098*** (2023.01)        ***G06N 3/0464*** (2023.01)
***G06N 3/084*** (2023.01)        ***G06N 3/09*** (2023.01)
***G06N 3/048*** (2023.01)

(52) Cooperative Patent Classification (CPC):
**G06N 3/098; G06N 3/0464; G06N 3/084;
G06N 3/09;** G06N 3/048

(86) International application number:
**PCT/CN2022/087647**

(87) International publication number:
**WO 2022/228204 (03.11.2022 Gazette 2022/44)**

(54) **FEDERATED LEARNING METHOD, APPARATUS, COMPUTER-READABLE STORAGE MEDIUM, AND COMPUTER PROGRAM PRODUCT**

FÖDERIERTES LERNVERFAHREN, VORRICHTUNG, COMPUTERLESBARES SPEICHERMEDIUM UND COMPUTERPROGRAMMPRODUKT

PROCÉDÉ, APPAREIL, SUPPORT DE STOCKAGE LISIBLE PAR ORDINATEUR ET PRODUIT PROGRAMME INFORMATIQUE D'APPRENTISSAGE FÉDÉRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **25.04.2021  CN 202110450585**

(43) Date of publication of application:
**07.02.2024  Bulletin 2024/06**

(73) Proprietor: **Huawei Technologies Co., Ltd.
Longgang
Shenzhen, Guangdong 518129 (CN)**

(72) Inventors:
• **ZHANG, Qi
Shenzhen, Guangdong 518129 (CN)**
• **ZHOU, Peichen
Shenzhen, Guangdong 518129 (CN)**
• **CHEN, Gang
Shenzhen, Guangdong 518129 (CN)**
• **CHEN, Dongsheng
Shenzhen, Guangdong 518129 (CN)**

(74) Representative: **Körber, Martin Hans
Mitscherlich PartmbB
Karlstraße 7
80333 München (DE)**

(56) References cited:
CN-A- 110 175 283        CN-A- 110 572 253
CN-A- 112 257 874        CN-A- 112 686 393
US-A1- 2018 331 897      US-A1- 2020 027 033
US-B2- 10 372 504

• LATIF U KHAN ET AL: "Dispersed Federated Learning: Vision, Taxonomy, and Future Directions", ARXIV.ORG, CORNELL UNIVERSITY LIBRARY, 201 OLIN LIBRARY CORNELL UNIVERSITY ITHACA, NY 14853, 12 August 2020 (2020-08-12), XP081739128
• CHENGXU YANG ET AL: "Heterogeneity-Aware Federated Learning", ARXIV.ORG, CORNELL UNIVERSITY LIBRARY, 201 OLIN LIBRARY CORNELL UNIVERSITY ITHACA, NY 14853, 12 June 2020 (2020-06-12), XP081695662

## Description

### TECHNICAL FIELD

This application relates to the field of federated learning, and in particular, to a federated learning method and apparatus.

### BACKGROUND

With more concern for user privacy, increasingly more attention is paid to data ownership, and countries are increasingly strict in data security management. Bottlenecks appear when only a conventional machine learning training mode is used to resolve predicament of a data silo. Federated learning (FL) is developed to help companies fully utilize user data information without infringing on privacy, and implement multi-party joint modeling, to help enterprises improve efficiency and reduce costs, and promote smart upgrades in different industries. The federated learning is an organization mode of artificial intelligence (artificial intelligence, AI) joint modeling. The federated learning has important theoretical innovation and practical implementation values for coordinating, without directly obtaining device private data, cross-device model training and parameter aggregation to complete algorithm model tasks and reducing communication computing overheads of conventional centralized machine learning.

However, due to particularity of a cross-device terminal deployment scenario, cross-device (cross-device) federated learning also brings new challenges. For example, client devices of the federated learning are heterogeneous, and different devices have great differences in hardware specifications such as storage, computing, communication, and batteries. As a result, performance of the federated learning is affected. Therefore, how to improve learning efficiency of the cross-device federated learning becomes an urgent problem to be resolved.

LATIF U KFIAN ET AL: "Dispersed Federated Learning: Vision, Taxonomy, and Future Directions", ARXIVORG, arXiv: 2008.05189v1, discloses dispersed federated learning (DFL) that is based on true decentralization, and that achieves resource-efficient and privacy-aware implementation of FL for several IoT scenarios.

### SUMMARY

This application provides a federated learning method, to synchronize aggregation information between servers in a process of cross-device federated learning, so that data of the servers keeps synchronized in a process of each round of iterative learning, and a client can obtain full data when accessing the server at any moment. This improves overall learning efficiency. The invention is defined in the independent claims. Additional features of the invention are provided in the dependent claims. In the following, parts of the description and drawings referring to embodiments which are not covered by the claims are not embodiments of the invention, but are examples useful for understanding the invention.

In view of this, according to a first aspect, this application provides a federated learning method applied to a federated learning system. The federated learning system includes a plurality of servers, the plurality of servers are connected to each other, and the plurality of servers are configured to perform iterative federated learning. A process of any one round of iterative learning includes: First, a first server receives a request message sent by at least one first client, where the request message is used to request a global model stored in the first server. A plurality of clients include the at least one first client. The first server sends a training configuration parameter and information about the global model to the at least one first client, where the configuration parameter and the information about the global model indicate the at least one first client to train the global model by using the training configuration parameter. The first server receives first model update parameters separately fed back by the at least one first client, where the first model update parameters are parameters of the global model obtained through training by the at least one first client. The first server aggregates the first model update parameters fed back by the at least one first client, to obtain first aggregation information in a current round of iteration. The first server obtains second aggregation information sent by a second server, where the second aggregation information is information obtained by the second server by aggregating received second model update parameters in the current round of iteration. The first server updates, based on the first aggregation information and the second aggregation information, the global model stored on the first server, to obtain the updated global model. The first server is a primary node in the federated learning system, the primary node is configured to manage the plurality of servers, and the obtaining, by the first server, second aggregation information sent by the second server further comprises: sending, by the first server, a first trigger indication to the second server, wherein the first trigger indication indicates the second server to send the second aggregation information to the first server; and receiving, by the first server, the second aggregation information from the second server. A counter is disposed in the first server, the counter is configured to count the request messages received by the plurality of servers in the one round of iteration, and the sending, by the first server, a first trigger indication to the second server comprises:when a value of the counter meets a first threshold, sending, by the first server, the first trigger indication to the second server.

In an implementation of this application, in the process of each round of iteration of the federated learning, the client needs to actively send the request message to the server to request to participate in federated learning, and send, to the server, the model update parameters obtained by training the global model. Therefore, the client accesses the server by sending the request message to the server, and the client does not need to maintain a stable and persistent connection to the server, to implement the cross-device federated learning system. In addition to aggregating model update parameters received by the plurality of servers, the plurality of servers further receive and aggregate model update parameters sent by another server, so that each server has more data than its own aggregation information. When the client accesses the server, more data can be obtained, and each round of iterative training can be performed based on the more data. This improves overall efficiency of the federated learning. It may be understood that in this application, the client accesses the server by combining the request and a response, and the client does not need to maintain the stable and persistent connection to the server. When accessing any server at any moment, the client can obtain more data required for model training. This improves learning efficiency of the federated learning on the client side.

In a possible implementation, before the first server receives the first model update parameters separately fed back by the at least one first client, the first server may receive request messages sent by the plurality of clients, so that the client requests, from the server, participation in federated learning. After receiving the request messages sent by the plurality of clients, the first server may deliver, to the plurality of clients, the training configuration parameter and the information about the global model that are locally stored. Therefore, in this embodiment of this application, the client may access the server by combining the request and the response, and the server does not need to actively address the client. This is equivalent to that the client may access the server only when needed, thereby implementing cross-device federated learning.

In a possible implementation, if the first server receives the request messages sent by the plurality of clients, the first server may filter out, from the plurality of clients, at least one client to participate in federated learning, for example, determine, based on a connection status or a device status of the client, whether the client is allowed to participate in federated learning. In this way, a client in a stable state is filtered out, to perform federated learning, and the overall efficiency of the federated learning is improved.

In a possible implementation, the plurality of servers include a plurality of second servers, and that the first server obtains second aggregation information sent by a second server may include: The first server receives the second aggregation information separately sent by the plurality of second servers. That the first server updates, based on the first aggregation information and the second aggregation information, the global model stored on the first server may include: The first server updates, based on the first aggregation information and the second aggregation information that is separately sent by the plurality of second servers, the global model stored on the first server, to obtain the updated global model.

In this implementation of this application, the servers in the federated learning system may transmit data to each other, so that each server has full data. In this way, the client can obtain the full data when accessing the server at any moment. This improves accuracy of the data obtained by the client. In addition, the client obtains the full data during federated learning, and this can improve the overall efficiency of the federated learning.

In a possible implementation, the foregoing method may further include: The plurality of servers transmit the first aggregation information to each other, where the first server sends the first aggregation information to each second server, so that each second server aggregates the first aggregation information and the second aggregation information, to obtain third aggregation information.

Therefore, in this implementation of this application, the servers in the federated learning system may transmit the aggregation information to each other, so that each server has more data. In this way, data consistency in the federated learning system is maintained.

According to the invention, the first server is used as a primary node. The primary node is configured to manage the plurality of servers, and the first server sends a first trigger indication to the second server. The first trigger indication indicates the second server to send the second aggregation information to the first server, to enable the first server to receive the second aggregation information sent by the second server.

Therefore, according to the invention, a process of the federated learning in the federated learning system may be managed by the primary node, and the servers are triggered by the primary node to synchronize the data with each other. In this way, the data consistency in the federated learning system is implemented.

According to the invention, the primary node includes a counter, the counter is configured to count the clients that send the request messages, and that the first server obtains the second aggregation information from the second server through triggering of the primary node may include: When a value of the counter meets a first threshold, the first server sends a second trigger indication to the second server, where the second trigger indication indicates the second server to perform a next round of iteration.

According to the invention, the received request messages are counted by using the counter. When the count reaches a specific value, the servers may be triggered to synchronize the data with each other. This is equivalent to limiting a quantity of clients that participate in each round of iteration of the federated learning, and avoids long tail effect caused by excessive clients, so that the servers can synchronize the data in time.

In a possible implementation, the first threshold includes a preset value, or a value determined based on the first threshold and a quantity of clients that access all servers in the federated learning system in a process of a previous round of iteration. Therefore, in this implementation of this application, the first threshold corresponding to the counter may be the preset value, or may be the value determined based on the quantity of clients that access all the servers in the federated learning system. Usually, the first threshold is not greater than the quantity of clients that access the federated learning system. Therefore, this avoids excessively long duration of waiting, of the federated learning, caused by waiting for the client to access, and improves the overall efficiency of the federated learning.

In a possible implementation, a timer is further set disposed in the primary node. The foregoing method may further include: When a value of the timer exceeds a second threshold, that is, when the timer times out, the first server sends the second trigger indication to each server, where the second trigger indication is used to trigger each server to enter the next round of iteration. Therefore, in this implementation of this application, a time window of each round of iteration may be set by using the timer. When the timer times out, the next round of iterative learning may be performed. This avoids long tail effect caused by the excessively long duration of waiting. Even if the client quits during federated learning, the overall training efficiency of the federated learning is not affected.

In a possible implementation, the second threshold is a preset value, a value determined based on the quantity of clients that access the federated learning system, or a value determined based on a value of a data amount for communication between all the servers in the federated learning system and the clients.

Therefore, in this implementation of this application, the time window may be determined based on the quantity of clients or the communication amount, so that the time window corresponding to the timer matches an actual scenario, and the time window of each round of iteration is more properly set.

In a possible implementation, the method may further include: The first server receives a query message sent by a third client, where the third client is any one of the plurality of clients; and the first server sends information about the updated global model to the third client corresponding to the query message.

Therefore, in this implementation of this application, the client may send the query message to the server to query the latest global model. Because the servers synchronize the data with each other in the process of each round of iterative learning, each server has more data than its own aggregation information, and the client can obtain more data when accessing any server, so that the client can obtain the more accurate global model.

According to a second aspect, this application provides a federated learning method applied to a federated learning system. The federated learning system includes a plurality of servers, one of the plurality of servers is used as a primary node, and the plurality of servers are configured to perform iterative learning to implement federated learning. A process of any one round of iteration in the iterative learning includes:

After any one of the plurality of servers receives a first request message, the primary node starts a counter and a timer. The counter is configured to count request messages received by the plurality of servers in the one round of iteration, and the request message is used to request to obtain a global model stored in a corresponding server of the plurality of servers. If a value of the counter reaches a first threshold, the primary node sends a first trigger indication to each of the plurality of servers, where the first trigger indication indicates the plurality of servers to transmit locally stored information to each other. If the value of the counter does not reach the first threshold, and a value of the timer reaches a second threshold, the primary node sends a second trigger indication to each server, where the second trigger indication indicates each server to perform a next round of iteration.

In an implementation of this application, one server in the federated learning system is used as the primary node, and the primary node maintains the timer and the counter. In the process of each round of iteration, the received request messages are counted by using the counter, and timing is performed by using the timer. Therefore, a quantity of clients that participate in each round of iteration and training duration of each round of iteration are limited. This avoids meaningless waiting caused by client straggling, improves overall efficiency of the federated learning, and avoids long tail effect.

In a possible implementation, the first threshold is a preset value, or the first threshold is related to a quantity of clients that access the federated learning system in a process of a previous round of iteration. Therefore, in this implementation of this application, the first threshold corresponding to the counter may be the preset value, or may be a value determined based on the quantity of clients that access all servers in the federated learning system. Usually, the first threshold is not greater than the quantity of clients that access the federated learning system. Therefore, this avoids excessively long duration of waiting, of the federated learning, caused by waiting for the client to access, and improves the overall efficiency of the federated learning.

In a possible implementation, the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client. Therefore, in this implementation of this application, a time window of each round of iteration may be set by using the timer. When the timer times out, the next round of iterative learning may be performed. This avoids long tail effect caused by the excessively long duration of waiting. Even if the client quits during federated learning, the overall training efficiency of the federated learning is not affected.

According to a third aspect, this application provides a federated learning system, including a plurality of servers and a plurality of clients. The plurality of servers include a first server and a second server, both the first server and the second server store information about a global model, the plurality of servers are configured to perform iterative learning to implement federated learning, and in a process of any one round of iteration in the iterative learning:

The first server is configured to receive a request message separately sent by at least one first client;

the first server is configured to send, for the request message separately sent by the at least one first client, a training configuration parameter and the information about the global model to the at least one first client, where the training configuration parameter and the information about the global model indicate the at least one first client to train the global model by using the training configuration parameter;

the first server is configured to receive first model update parameters separately fed back by the at least one first client, where the first model update parameters are parameters of the global model obtained through training by the at least one first client;

the first server is configured to aggregate the first model update parameters separately fed back by the at least one first client, to obtain first aggregation information;

the second server is configured to: receive second model update parameters sent by at least one corresponding second client, and aggregate the second model update parameters sent by the at least one second client, to obtain second aggregation information;

the first server is configured to receive the second aggregation information sent by each second server; and

the first server is configured to update, based on the first aggregation information and the second aggregation information that is sent by each second server, the global model stored on the first server, to obtain the updated global model. The first server is a primary node in the federated learning system, the primary node is configured to manage the plurality of servers, and the first server is configured to obtain the second aggregation information sent by the second server by: sending a first trigger indication to the second server, wherein the first trigger indication indicates the second server to send the second aggregation information to the first server; and receiving the second aggregation information from the second server. A counter is disposed in the first server, the counter is configured to count the request messages received by the plurality of servers in the one round of iteration, and the first server is further configured to send the first trigger indication to the second server when a value of the counter meets a first threshold.

In the federated learning system provided in this implementation of this application, when performing each round of iterative learning, the client may actively send the request to the server to request to participate in federated learning, and feed back the parameters of the trained global model to the server. The server aggregates the received model update parameters, to obtain the aggregation information. In addition, the server further receives aggregation information sent by another server, so that the server has more information than its own aggregation information. In this way, the client does not need to maintain a persistent connection to the server, and the client can obtain more data when accessing the server at any moment. This can improve accuracy of the data obtained by the client. Therefore, each round of iterative training can be performed based on the more data. This improves overall efficiency of the federated learning.

In a possible implementation, there are a plurality of second servers included in the plurality of servers. Each of the plurality of second servers is configured to: receive the second model update parameters sent by the at least one corresponding second client, and aggregate the second model update parameters sent by the at least one second client, to obtain the second aggregation information. The first server is specifically configured to receive the second aggregation information separately sent by the plurality of second servers. The first server is specifically configured to update, based on the first aggregation information and the second aggregation information that is separately sent by the plurality of second servers, the global model stored on the first server, to obtain the updated global model.

In this implementation of this application, the servers in the federated learning system may transmit data to each other, so that each server has full data. In this way, the client can obtain the full data when accessing the server at any moment. This improves accuracy of the data obtained by the client. In addition, the client obtains the full data during federated learning, and this can improve the overall efficiency of the federated learning.

In a possible implementation, not forming part of the invention, the plurality of servers further include a third server used as a primary node, and the primary node is configured to manage the plurality of servers. The primary node is configured to separately send a first trigger indication to the plurality of servers. The second server is specifically configured to send the second aggregation information to the first server based on the first trigger indication.

Therefore, in this implementation of this application, the primary node may trigger the servers to transmit the aggregation information to each other, so that each server can have more comprehensive full data. In this way, the client can obtain the full data when accessing the server at any moment. This improves the accuracy of the data obtained by the client. In addition, the client obtains the full data during federated learning, and this can improve the overall efficiency of the federated learning.

According to the invention, the primary node includes a counter, the counter is configured to count a quantity of request messages received by the plurality of servers, and the request message is used to request to obtain a global model stored in a corresponding server in the plurality of servers. The primary node is specifically configured to: when a value of the counter meets a first threshold, send the first trigger indication to each of the plurality of servers, where the first trigger indication is used to trigger each second server to send the second aggregation information to the first server.

According to the invention, the received request messages are counted by using the counter. When the count reaches a specific value, the servers may be triggered to synchronize the data with each other. This is equivalent to limiting a quantity of clients that participate in each round of iteration of the federated learning, and avoids long tail effect caused by excessive clients, so that the servers can synchronize the data in time.

In a possible implementation, the primary node further includes a timer, and the timer stars timing when a first request message is received in a process of each round of iteration. The primary node is further configured to: when a value of the timer exceeds a second threshold, send a second trigger indication to each of the plurality of servers, where the second trigger indication indicates the plurality of servers to perform a next round of iteration.

Therefore, in this implementation of this application, a time window of each round of iteration may be set by using the timer. When the timer times out, the next round of iterative learning may be performed. This avoids long tail effect caused by the excessively long duration of waiting. Even if the client quits during federated learning, the overall training efficiency of the federated learning is not affected.

In a possible implementation, the second threshold is a preset value, the second threshold is related to a quantity of clients that access each server in the federated learning system in a process of a previous round of iteration, or the second threshold is related to a value of a data amount for communication, in a process of a previous round of iteration, between the plurality of servers and the plurality of clients. Therefore, in this implementation of this application, the time window may be determined based on the quantity of clients or the communication amount, so that the time window corresponding to the timer matches an actual scenario, and the time window of each round of iteration is more properly set.

In a possible implementation, the first server receives a query message sent by a third client, where the third client includes any client that accesses the federated learning system. The first server sends information about the updated global model to the third client corresponding to the query message. Therefore, in this implementation of this application, the client may send the query message to the server to query the latest global model. Because the servers synchronize the data with each other in the process of each round of iterative learning, each server has more data than its own aggregation information, and the client can obtain more data when accessing any server, so that the client can obtain the more accurate global model.

In a possible implementation, the first server is further configured to send the first aggregation information to the second server. The second server is specifically configured to update the locally stored global model based on the first aggregation information and the second aggregation information, to obtain the updated global model. Therefore, in this implementation of this application, the servers in the federated learning system may transmit the aggregation information to each other, so that each server has more data. In this way, data consistency in the federated learning system is maintained.

According to a fourth aspect, not forming part of the invention, this application provides a server applied to a federated learning system. The federated learning system includes a plurality of servers and a plurality of clients, the plurality of servers are configured to perform iterative federated learning, and any one of the plurality of servers includes:

a transceiver module, configured to receive a request message sent by at least one first client, where the request message is used to request a global model stored in a first server, and the plurality of clients include the at least one first client, where

the transceiver module is further configured to send a training configuration parameter and information about the global model to the at least one first client, where the training configuration parameter and the information about the global model indicate the at least one first client to train the global model by using the training configuration parameter; and

the transceiver module is further configured to receive first model update parameters separately fed back by the at least one first client, where the first model update parameters are parameters of the global model obtained through training by the at least one first client;

an aggregation module, configured to aggregate the first model update parameters fed back by the at least one first client, to obtain first aggregation information in a current round of iteration, where

the transceiver module is further configured to obtain second aggregation information sent by a second server, where the second aggregation information is information obtained by the second server by aggregating received second model update parameters in the current round of iteration; and

an update module, configured to update, based on the first aggregation information and the second aggregation information, the global model stored on the first server, to obtain the updated global model.

In a possible implementation, the transceiver module is further configured to receive the second aggregation information separately sent by a plurality of second servers.

The update module is specifically configured to update, based on the first aggregation information and the second aggregation information that is separately sent by the plurality of second servers, the global model stored on the first server, to obtain the updated global model.

In a possible implementation, the first server is a primary node in the federated learning system, and the primary node is configured to manage the plurality of servers.

The transceiver module is further configured to send a first trigger indication to the second server, where the first trigger indication indicates the second server to send the second aggregation information to the first server.

The transceiver module is further configured to receive the second aggregation information in the second server.

In a possible implementation, a counter is disposed in the first server, and the counter is configured to count a quantity of request messages received by the plurality of servers.

The transceiver module is specifically configured to: when a value of the counter meets a first threshold, send the first trigger indication to the second server.

In a possible implementation, the first threshold is a preset value, or the first threshold is related to a quantity of clients that access the federated learning system in a process of a previous round of iteration.

In a possible implementation, the primary node includes a timer, and the timer starts timing after a first request message is received in each round of iteration.

The transceiver module is specifically configured to: when a value of the timer exceeds a second threshold, receive a second trigger indication sent by the primary node, where the second trigger indication indicates to perform a next round of iterative learning.

In a possible implementation, the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client.

In a possible implementation, the transceiver module is further configured to receive a query message sent by a third client, where the third client includes any client that accesses the federated learning system.

The transceiver module is further configured to send information about the updated global model to the third client corresponding to the query message.

In a possible implementation, the transceiver module is further configured to send the first aggregation information to the second server. In this way, the second server updates the locally stored global model based on the first aggregation information and the second aggregation information, to obtain the updated global model.

According to a fifth aspect, not forming part of the invention, this application provides a server applied to a federated learning system. The federated learning system includes a plurality of servers, one of the plurality of servers is used as a primary node, and the plurality of servers are configured to perform iterative learning to implement federated learning. The primary node includes:

> a startup module, configured to: after any one of the plurality of servers receives a first request message, start a counter and a timer, where the counter is configured to count request messages received by the plurality of servers in one round of iteration, and the request message is used to request to obtain a global model stored in a corresponding server of the plurality of servers, and
> a transceiver module, configured to: if a value of the counter reaches a first threshold, send a first trigger indication to each of the plurality of servers, where the first trigger indication indicates the plurality of servers to transmit locally stored information to each other.

The transceiver module is further configured to: if the value of the counter does not reach the first threshold, and a value of the timer reaches a second threshold, send a second trigger indication to each server, where the second trigger indication indicates each server to perform a next round of iteration.

In a possible implementation, the first threshold is a preset value, or the first threshold is related to a quantity of clients that access the federated learning system in a process of a previous round of iteration.

In a possible implementation, the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client. According to a sixth aspect, not forming part of the invention, an embodiment of this application provides a federated learning apparatus, including a processor and a memory. The processor and the memory are interconnected through a line, and the processor invokes program code in the memory to perform a processing-related function in the federated learning method according to any one of the first aspect or the second aspect. Optionally, the federated learning apparatus may be a chip.

According to a seventh aspect, not forming part of the invention, an embodiment of this application provides a federated learning apparatus.

The federated learning apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any optional implementation of the first aspect or the second aspect.

According to an eighth aspect, an embodiment of this application provides a computer-readable storage medium including instructions. When the instructions are executed by a federated learning system, they cause the federated learning system to carry out the method in an optional implementation of the first aspect.

According to a ninth aspect, an embodiment of this application provides a computer program product including software code. When the software code is executed by a federated learning system, it causes the federated learning system to carry out the method in an optional implementation of the first aspect.

## BRIEF DESCRIPTION OF DRAWINGS

FIG. 1 is a schematic diagram of an artificial intelligence main framework applied to this application;
FIG. 2 is a schematic diagram of an architecture of a federated learning system according to an embodiment of this application;
FIG. 3 is a schematic diagram of a structure of a server according to an embodiment of this application;
FIG. 4 is a schematic flowchart of a federated learning method according to an embodiment of this application;
FIG. 5 is a schematic diagram of an architecture of another federated learning system according to an embodiment of this application;
FIG. 6 is a schematic flowchart of another federated learning method according to an embodiment of this application;
FIG. 7 is a schematic flowchart of another federated learning method according to an embodiment of this application;
FIG. 8 is a schematic diagram of an aggregation mode according to an embodiment of this application;
FIG. 9 is a schematic diagram of a structure of a server according to an embodiment of this application;
FIG. 10 is a schematic diagram of a structure of another server according to an embodiment of this application; and
FIG. 11 is a schematic diagram of a structure of another server according to an embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

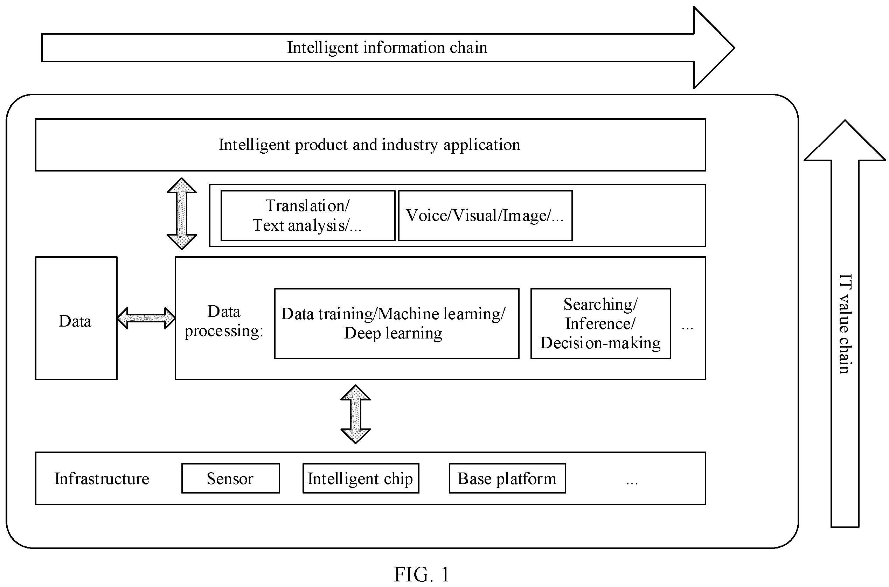

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of human intelligence to a systemic industrial ecology.

(1) Infrastructure

The infrastructure provides computing capability support for the artificial intelligence system, implements communication with the external world, and implements support by using a base platform. The infrastructure communicates with the outside by using a sensor. A computing capability is provided by an intelligent chip, for example, a hardware acceleration chip such as a central processing unit (CPU), a neural network processing unit (NPU), a graphics processing unit (GPU), an application-specific integrated circuit (ASIC), or a field programmable gate array ( FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system for computation, where the distributed computing system is provided by the base platform.

(2) Data

Data at an upper layer of the infrastructure indicates a data source in the field of artificial intelligence. The data relates to a graph, an image, a voice, and text, further relates to Internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.
Machine learning and deep learning may mean performing symbolized and formalized intelligent information modeling, extraction, preprocessing, training, and the like on data.
Inference is a process in which a pattern of human intelligent inference is simulated in a computer or an intelligent system, and machine thinking and problem resolving are performed by using formalized information according to an inferring control policy. A typical function is searching and matching.
Decision-making is a process in which a decision is made after intelligent information is inferred, and usually provides functions such as classification, ranking, and prediction.

(4) General capabilities

After data processing mentioned above is performed on data, some general capabilities may further be formed based on a data processing result, for example, an algorithm or a general system, for example, translation, text analysis, computer vision processing, speech recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent information decision-making mainly include intelligent terminals, intelligent transportation, intelligent health care, autonomous driving, and the like.
Embodiments of this application may be applied to the field of federated learning, and a neural network may be collaboratively trained by using a client and a server. Therefore, a large quantity of neural network-related applications are involved, for example, a neural network trained by using the client during federated learning. To better understand the solutions provided in embodiments of this application, the following first describes terms and concepts related to the neural network in embodiments of this application.

(1) Neural network

The neural network may include a neuron. The neuron may be an operation unit that uses $x_s$ and an intercept of 1 as an input. An output of the operation unit may be shown as a formula (1-1):

$$h_{W,b}(x) = f(W^T x) = f(\sum_{s=1}^{n} W_s x_s + b)$$

s = 1, 2, ..., or n, n is a natural number greater than 1, $W_s$ is a weight of $x_s$, and b is bias of the neuron. f is an activation function (activation function) of the neuron, used to introduce a non-linear feature into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (DNN) is also referred to as a multi-layer neural network, and may be understood to be a neural network with a plurality of intermediate layers. The DNN is divided based on locations of different layers. Neural networks inside the DNN may be classified into three types: an input layer, an intermediate layer, and an output layer. Usually, a first layer is the input layer, a last layer is the output layer, and a middle layer is the intermediate layer, which is also referred to as a hidden layer. Layers are fully connected. To be specific, any neuron at an $i^{th}$ layer is necessarily connected to any neuron at an $(i+1)^{th}$ layer.

Although the DNN seems complex, each layer of the DNN may be represented as the following linear relationship expression: $\vec{y} = \alpha(w\vec{x} + \vec{b})$, where $\vec{x}$ is an input vector, $\vec{y}$ is an output vector, $\vec{b}$ is a bias vector, which is also referred to as a bias parameter, $w$ is a weight matrix (which is also referred to as a coefficient), and $\alpha()$ is an activation function. At each layer, only such a simple operation is performed on the input vector $\vec{x}$ to obtain the output vector $\vec{y}$. Because there are a plurality of layers in the DNN, there are also a plurality of coefficients $W$ and a plurality of offset vectors $\vec{b}$. Definitions of the parameters in the DNN are as follows: The coefficient $w$ is used as an example. It is assumed that in a DNN with three layers, a linear coefficient from the fourth neuron at the second layer to the second neuron at the third layer is defined as $W_{24}^{3}$. The superscript 3 indicates a layer at which the coefficient $W$ is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer does not have the parameter $W$. In the deep neural network, more intermediate layers make the network more capable of describing a complex case in the real world. Theoretically, a model with more parameters has higher complexity and a larger "capacity". It indicates that the model can complete a more complex learning task. A process of training the deep neural network is a process of learning a weight matrix, and a final objective of training is to obtain weight matrices (weight matrices including vectors $W$ at a plurality of layers) of all layers in a trained deep neural network.

(3) Convolutional neural network

The convolutional neural network (CNN) is a deep neural network with a convolutional structure. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, a direct benefit brought by weight sharing is that connections between layers in the convolutional neural network are reduced and an overfitting risk is lowered.

A network for extracting a feature mentioned below in this application may include one or more convolutional layers. For example, the network for extracting a feature may be implemented by using the CNN.

(4) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers in the deep neural network). For example, if the predicted value of the network is high, the weight vector is adjusted to decrease the predicted value, and adjustment is continuously performed until the deep neural network can predict the target value that is actually expected or a value that is very close to the target value that is actually expected. Therefore, "how to obtain, through comparison, a difference between the predicted value and the target value" needs to be predefined. This is a loss function or an objective function. The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible. The loss function may generally include mean square error, cross entropy, logarithm, and exponential loss functions. For example, the error mean square loss function may be used as the loss function, which is defined as $mse = \frac{1}{N}\sum_{n=1}^{N}(y_n - \hat{y}_n)^2$ . Specifically, a specific loss function may be selected based on an actual application scenario.

(5) Back propagation algorithm

In a training process, a neural network may correct values of parameters of an initial neural network model by using an error back propagation (back propagation, BP) algorithm, so that a reconstruction error loss in the neural network model becomes increasingly smaller. Specifically, an input signal is forward transmitted until an error loss is generated in an output, and the parameter of the initial neural network model is updated through back propagation of information about the error loss, to converge the error loss. The back propagation algorithm is an error-loss-cperformed back propagation motion intended to obtain a parameter, for example, a weight matrix, of an optimal neural network model.

In this application, when performing model training, the client may train a global model by using a loss function or by using the BP algorithm, to obtain a trained global model.

(6) Federated learning (FL)

A distributed machine learning algorithm uses a plurality of clients (clients or FL-clients) such as mobile devices or edge servers, and a plurality of servers to collaboratively complete model training and algorithm update without data leaving a domain, to obtain a trained global model. For example, the client trains a global model by using a locally stored training sample, and feeds back model parameters obtained through training to the server. The server aggregates the received model parameters, and updates a locally stored global model based on information obtained through aggregation, to obtain a latest global model.

(7) Horizontal federation

When two datasets have a large quantity of overlapping user features but a small quantity of overlapping users, the datasets are split based on users, and some data with same user features but different users is removed from training.

Usually, when federated learning is performed, a plurality of servers and clients need to participate in federated learning. The client trains a model, and uploads the model to the server. The server performs aggregation, to obtain a final model.

For example, in the field of machine learning and deep learning, distributed optimization has become a prerequisite. Commonly used distributed training is in a parameter server (parameter server, PS) mode, including a worker (a compute node for training in the parameter server mode) role and a PS (parameter server) role. A computing center allocates training data to workers. Several workers communicate with the PS through a network to exchange information such as models or gradients. The PS performs aggregation and model optimization, to perform efficient training and obtain a final model. In the PS mode, each server is actually responsible for only some of allocated parameters (the plurality of servers maintain one global shared parameter), and only some of the data and processing tasks are allocated to each compute node. Although a problem of large-scale distributed training is resolved in the PS mode, each server (server) in the PS mode can only process calculation of some parameters, and a participant is required to maintain a stable and persistent connection to a central server. In a cross-device scenario, most FL-clients are stateless and unreliable, and cannot perform addressing. In addition, the central server needs to aggregate full parameters and complete aggregation (aggregation) calculation. It is clearly that challenges of cross-device terminals cannot be coped with in the PS training mode.

For another example, in some existing federated learning frameworks such as the TensorFlow federated (TFF) framework or the PaddleFL framework, the TFF focuses on providing a simulation interface for federated learning, and supports local simulation of any quantity of FL-clients and FL-servers. However, the framework itself does not have cross-network communication, and therefore, the framework cannot be used in a real production environment. PaddleFL provides a distributed federated learning framework based on data parallelism, including three roles: an FL-server, an FL-trainer, and an FL-scheduler. However, the FL-trainer and the FL-server use a remote procedure call (RPC) for cross-process communication. There is a stable and persistent connection between the FL-client and the FL-server. The FL-scheduler can schedule workers, and determine which workers can participate in training before each update cycle. This cannot be implemented in a cross-device deployment scenario.

Therefore, this application provides a federated learning architecture, so that a client accesses a server in a loose access mode, and data consistency is maintained between servers. In this way, the client can obtain full data when accessing the server at any time. This improves model training efficiency of the client.

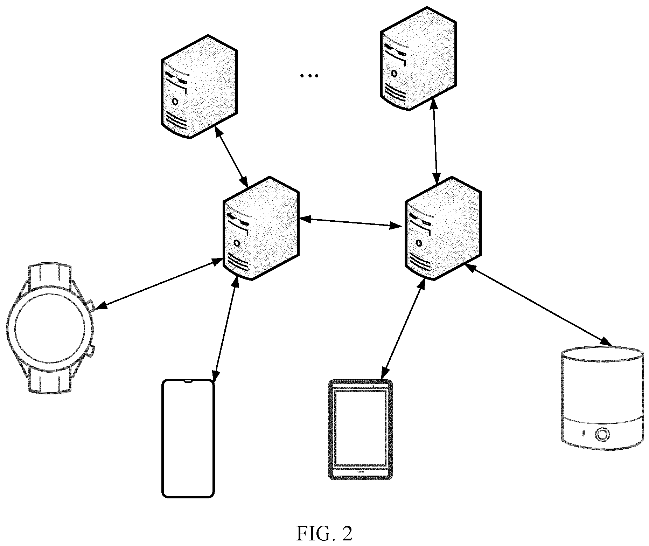

A federated learning system provided in this application may be shown in FIG. 2. The system (or may also be referred to as a cluster for short) may include a plurality of servers. The plurality of servers are connected to each other, and each server may communicate with one or more clients.

The server may usually be deployed on a server. In some scenarios, the server may also be deployed on a terminal device. This may be specifically adjusted based on an actual application scenario. This is not limited in this application. The client may be deployed on a terminal, for example, a mobile phone, a wristband, or a smart television, or may be deployed on a server. This may be specifically adjusted based on an actual application scenario. This is not limited in this application.

One of the plurality of servers may be used as a primary node, and the primary node is used to maintain transaction consistency in the cluster, so that the servers can work collaboratively.

The framework may further include a scheduler (not shown in the figure), an elastic load balancer (ELB) (not shown in the figure), or the like. Details are not described herein again. For example, the scheduler may be deployed on any server, and may be configured to schedule a communication resource in the cluster, for example, a time window and a channel used for sending data. The ELB may be deployed on any server to route the communication between the server and the client. The ELB determines a server accessed by the client based on load of the servers. For example, the ELB may connect, to a server with light load, a client that sends a request message. In this way, the servers can maintain proper load. This prevents one or more servers from being overloaded.

Specifically, during federated learning, each server may deliver a to-be-trained model to a client connected to the server. The client may train the model by using a locally stored training sample, and feed back data of the trained model to the server. After receiving one or more trained models fed back by the one or more clients, the server may aggregate data of the received one or more models to obtain aggregated data, which is equivalent to an aggregated model. After a stop condition is met, a final model can be output, to complete federated learning.

Generally, as a quantity of clients increases, a communication amount between the client and the server also increases. For example, when tens of millions of clients request to perform federated learning at the same time, a large amount of network bandwidth is required, and a single server cannot undertake huge data and parameters. Therefore, how to obtain an efficient federated learning system to cope with challenges of system heterogeneity and remote communication across devices becomes a key problem.

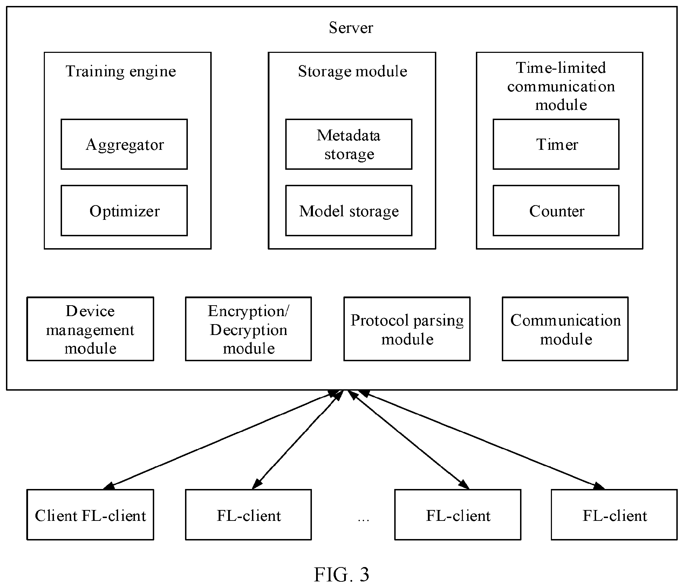

For example, for a structure of a server in the federated learning system provided in this application, refer to FIG. 3. The server may include a training engine, a storage module, a time-limited communication module, a device management module, an encryption/decryption module, a protocol parsing module, a communication module, or the like.

The communication module is used for data communication between the FL-server and FL-client, and is used in dynamic networking of an FL-server cluster to implement auto scaling of a central server resource. When the FL-server communicates with the FL-client, transmission may be performed by using a hypertext transfer protocol (HTTP), to implement a stable and transient connection. When the FL-server communicates with the FL-server, cross-process communication may be performed by using a remote procedure call (remote procedure call, RPC) protocol, to implement a stable and persistent connection.

The device management module is responsible for device-related services such as device selection for the federated learning. For example, after receiving a request message from a client, the device management module selects whether the client participates in federated learning.

The encryption/decryption module encrypts weights of uploaded and downloaded models to reduce a possibility of obtaining original samples through model inversion attacks.

The protocol parsing module serializes sent communication messages, deserializes received messages, or the like.

The training engine is a module, including an aggregator and an optimizer, that performs federated learning and computing on data uploaded by the FL-client. The aggregator may be configured to aggregate the data, for example, perform summation or weighted summation on the data uploaded by the FL-client. The optimizer may be configured to: calculate a model gradient, optimize a model based on the calculated gradient, and the like, to obtain a model with a more accurate output.

The storage module stores metadata required for federated learning and data such as a global optimal model obtained through training.

The time-limited communication module includes a timer and a counter, and performs subsequent processing when the timer times out or a value of the counter reaches a threshold.

With reference to the federated learning system in FIG. 2 and the structure of the server in the system shown in FIG. 3, the following describes a procedure of a federated learning method provided in this application.

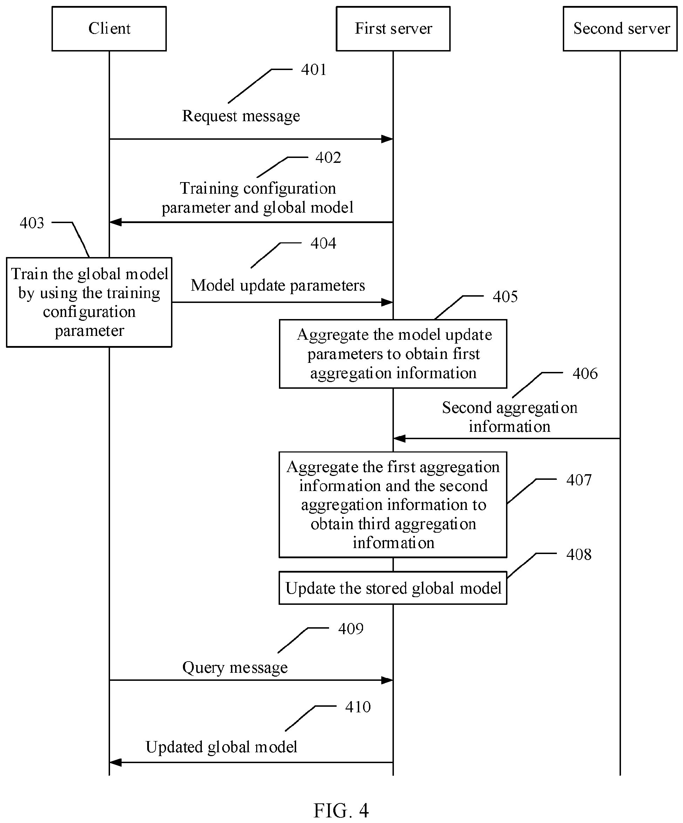

Refer to FIG. 4. The following is a schematic flowchart of the federated learning method according to this application with reference to the foregoing architecture.

401: A first server receives at least one request message sent by at least one client.

The first server may be any one of the plurality of first servers shown in FIG. 2. The at least one client may be a client that is connected to the first server. For example, a request message sent by the at least one client may be routed to the first server by the ELB.

The client may request, by using the request message, to participate in federated learning from the first server, to request to use local data to perform model training, and influence a global model by using the local data, to obtain a model that carries a personalized feature of the client.

For example, when the data stored on the client exceeds a preset data amount, the request message may be sent to the federated learning system, and the ELB in the system routes the request message to the adapted first server, to implement federated learning through collaboration between the first server and the client.

For another example, the client may collect personalized training data that is different from training data of another device. After collecting the training data, the client may actively send the request message to the federated learning system, to request to use the locally stored data to perform federated learning, and to obtain a model adapted to the training data. The client synchronizes the model to the system, to complete federated learning, so that a global model in the cluster can adaptively learn various types of data collected by the clients, and output precision of the global model is improved.

402: The first server separately sends a training configuration parameter and the global model to the at least one client for the request message.

After receiving the request message sent by the at least one client, if determining to allow the at least one client to participate in federated learning, the first server may separately send the training configuration parameter and information about the locally stored global model to the at least one client. The global model is a to-be-trained model. The information about the global model may include a structure parameter (for example, a depth or a width of the global model), a weight parameter, or the like of the global model. The training configuration parameter is a parameter used when the global model is trained, for example, information such as a learning rate, a quantity of epochs, or a security algorithm type.

In a possible implementation, if the first server receives a plurality of request messages sent by a plurality of clients, the first server may filter out, from the plurality of clients, at least one of the plurality of clients to participate in federated learning. For example, the request message may carry information about a terminal, for example, network connection status, battery level, and load information. The first server may filter out, based on the information about the terminal, a client with a stable connection to perform federated learning, and deliver the training configuration parameter and the model to the at least one client that is filtered out. Therefore, the client may train the model based on the training configuration parameter.

403: The client trains the global model by using the training configuration parameter.

After receiving the training configuration parameter and the global model that are delivered by the first server, the client (or referred to as a first client) may train the global model by using a training set, to obtain a trained global model. The training set may include a plurality of training samples. The training sample may be data collected by the client, or may be data received by the client. This is not limited herein.

For example, the client may be an application program deployed on a terminal of a user. In a process of enabling the client by the user, the client may collect data generated during the enabling of the client by the user, and use the data as the training sample to request, from the server, to participate in federated learning. In this way, the collected data is applied to a model update, so that the global model in the federated learning system can be adapted to the clients.

404: The client feeds back model update parameters to the first server.

After the client trains the global model to obtain the trained model, the client feeds back information about the trained model, that is, the model update parameters, to the first server.

Specifically, the model update parameters may include a weight parameter of the model. For example, in a process of a $t^{th}$ time of iterative federated learning, model update parameters received by a server $j$ may be represented as $\left\{w_t^{k,j}, n_{k,j}\right\}_{k \in K}^{S_j}$, where $n_k$ indicates a size of a dataset of a $k^{th}$ client, that is, $w_t^{k,j}$ is a weight parameter of the model obtained through training by the client.

405: The first server aggregates the model update parameters fed back by the at least one client, to obtain first aggregation information.

After receiving the model update parameters separately fed back by the at least one client, the first server aggregates the model update parameters separately fed back by the at least one client, to obtain the first aggregation information. This is equivalent to aggregating models fed back by the at least one client, to obtain information about an aggregated model.

Specifically, there may be a plurality of specific modes such as averaging and weighted fusion. The aggregation mode is not limited in this application, and may be specifically adjusted based on an actual application scenario.

406: The first server obtains second aggregation information from a second server.

The second server includes a server other than the first server in the federated learning system, and there may be one or more second servers. In addition to aggregating model update parameters of at least one client connected to the first server, the first server may further receive the second aggregation information obtained by aggregating received model update parameters by another server, so that aggregation information of the servers in the federated learning system can be consistent. In addition, each server may obtain the aggregation information of another server, so that each server can maintain more data. When accessing the server, each client can obtain more comprehensive data without maintaining a persistent connection to the server. Therefore, the federated learning system provided in this application may adapt to a scenario in which a client is deployed on a mobile terminal.

In a possible scenario, the first server may receive the aggregation information sent by all servers in the federated learning system other than the first server. In other words, the servers in the federated learning system may transmit the aggregation information to each other, so that each server can have full data. The client can obtain full data when accessing the server at any moment. This improves accuracy of the data obtained by the client.

It should be noted that, in the following implementations of this application, an example in which all the servers in the federated learning system transmit the aggregation information to each other is used for description. In an actual application scenario, data may also be transmitted between some servers. Alternatively, some servers only receive the aggregation information but do not send the aggregation information. Specifically, adjustment may be made based on an actual application scenario. This is not limited in this application.

It should be further noted that in this implementation of this application, a manner of obtaining the second aggregation information by the second server is similar to a manner of obtaining the first aggregation information by the first server. For example, after receiving a request message sent by a second client, the second server delivers a training configuration parameter and a global model to the second client. The training configuration parameter and the global model are usually the same as the training configuration parameter and the global model that are delivered by the first server to the first client. The second client trains the global model based on the training configuration parameter by using locally stored training data, and feeds back parameters (for example, weight parameters and a width or depth of the model) of the trained global model to the second server. The second server aggregates the received model update parameters, to obtain the second aggregation information. A specific process in which the second server obtains the second aggregation information is not described again in this application.

A primary node triggers the servers in the cluster to transmit the aggregation information to each other, to synchronize the data in the cluster, so that all the servers in the cluster can have more comprehensive data.

The primary node is one server in the federated learning system, for example, the foregoing first server or the foregoing second server.

According to the invention, a counter and possibly a are disposed in the primary node, to monitor a quantity of clients that participate in each round of iteration or a time window of each round of iteration, to effectively control the quantity of clients that participate in federated learning and duration of a process of each round of iteration. This avoids ineffective waiting, and reduces "long tail" effect.

Specifically, the counter is configured to count request messages that are sent by the clients and that are received in the federated learning system. After each round of iteration is completed, the primary node may initialize the counter. In a next round of iteration, when any server in the federated learning system receives a first request message, the primary node starts the timer and counts each request message. When a value of the counter reaches a first threshold, the first server may be triggered to send the training configuration parameter and the model to the client. For example, the primary node sends a first trigger indication to the servers, to indicate the servers to transmit the aggregation information of the servers to another server, for example, indicate the second server to send the second aggregation information to the first server. If the primary node is the first server, the primary node may trigger the primary node to send the first aggregation information to another server (for example, all second servers), and further send the first trigger indication to the second servers, to indicate the second servers to send the second aggregation information of the second servers to the another server.

Therefore, the clients that participate in federated learning may be monitored by using the counter, to avoid low learning efficiency caused by excessive clients. For example, after routing each request message to the server, the ELB may send a notification message to the primary node to notify the primary node of received statuses of the primary node such as a quantity of request messages and a receiving timestamp. In this way, the primary node counts the quantity of request messages. When the count of the counter exceeds the first threshold, the primary node sends the first trigger instruction to the servers, to trigger the servers (including the primary node) in the federated learning system to transmit the data to each other, thereby completing synchronizing the data between the servers. In this way, each server has the more comprehensive data. After accessing the server, the client may obtain the more comprehensive data, so that federated learning or application may be performed based on the more comprehensive data. This improves user experience of the client.

Optionally, the first threshold includes a preset value, or is related to a quantity of clients that access the plurality of servers in a current round of iteration or a previous round of iteration, or the like. Therefore, in this implementation of this application, the first threshold corresponding to the counter may be the preset value, or may be a value determined based on the quantity of clients that access the servers. Usually, the first threshold is not greater than the quantity of clients that access the servers. Therefore, this avoids excessively long duration of waiting, of the federated learning, caused by waiting for the client to access, and improves overall efficiency of the federated learning.

The timer may be configured to set the time window in a process of federated learning, that is, only one round of federated learning is performed in the time window. When a value of the timer exceeds a second threshold, the primary node may trigger the server to perform a next round of learning. If model update parameters are obtained in a process of current learning, the model update parameters may be discarded. Certainly, the model update parameters may also be retained and specified, to improve data utilization. Therefore, in this implementation of this application, a time window of each round of iterative learning is monitored by using the timer, and each round of iterative learning may be performed in the time window of the timer. In this way, impact of some clients on the process of the federated learning is reduced when the some clients go offline, have excessively low training efficiency, or the like. This improves the efficiency of the federated learning.

Specifically, when any server in the federated learning system receives the first request message, the primary node may start the timer, and complete the current round of iteration in the time window of the timer. When the timer times out, the primary node may send a second trigger indication to the servers (including the primary node) in the federated learning system, to trigger the servers to enter next round of iteration. For the primary node, when determining that the timer times out, the primary node may directly determine to enter the next round of iteration, and may not need to send the second trigger indication to the primary node. Certainly, the primary node may also generate the second trigger indication for the primary node. This is not limited in this application.

Optionally, the second threshold may be a preset value, or may be related to a quantity of clients that access the federated learning system in the current round or the previous round, or related to a value of a data amount for communication between the client and the server in the current round or the previous round. For example, the second threshold may be in a positive correlation with a value determined by using the quantity of clients that access the federated learning system, or the value of the data amount for communication between the client and the server. For example, a large quantity of clients that access the federated learning system in the previous round of iteration indicates a large second threshold. A large data amount for communication between the client and the server in the previous round of iteration indicates a large second threshold. This may be specifically adjusted based on an actual application scenario. Therefore, in this implementation of this application, a time window matching the actual application scenario may be set for the timer, to avoid a case in which the time window is excessively long or excessively short. This improves the overall efficiency of the federated learning.

In a possible scenario, when the timer and the counter work collaboratively, and the server in the federated learning system receives the first request message in each round of iteration, the primary node starts the timer and the counter. If the value of the counter reaches the first threshold, but the timer does not time out, the timer may be disabled. After aggregation of all model update parameters fed back by clients in the process of the current round of iteration is completed, the next round of iteration may be performed. If the value of the counter does not reach the first threshold, but the timer times out, the current round of iteration may be determined to be ended, and the next round of iteration is performed. Data in the current round of iteration may be discarded or retained. If the value of the counter does not reach the first threshold, and the timer does not time out, the current round of iteration may be continued.

Therefore, in this implementation of this application, the quantity of clients that participate in federated learning in the current round of iteration and the duration of the current round of iteration may be limited by the timer and the counter working collaboratively. This avoids long tail effect caused by a situation such as waiting for the client to access, or waiting for the client to quit during iteration.

407: The first server aggregates the first aggregation information and the second aggregation information, to obtain third aggregation information.

After obtaining the first aggregation information and the second aggregation information that is sent by another server, the first server may update the locally stored global model based on the received first aggregation information and the received second aggregation information, that is, step 407 and step 408.

In addition to aggregating model update parameters that are fed back by one or more clients and that are received by the first server, the first server may further receive the aggregation information obtained by the another server, and aggregate, for another time, the first aggregation information obtained through calculation by the first server and the received second aggregation information, to obtain the third aggregation information with more complete data.

Therefore, in this implementation of this application, the servers not only aggregate the model update parameters received by the servers, but also aggregate, for another time, information obtained by performing aggregation by the another server in the federated learning system. Therefore, each server may have the data included in each server in the federated system, so that the data of the servers is consistent, and the client can obtain the full data when accessing the server at any moment.

For example, in a $(t + 1)^{th}$ iteration, a total quantity of clients in the federated learning system is denoted as K, and weight update information that is uploaded by some clients (denoted as a set $S_j$) and that is collected by the server $j$ is represented as $\left\{ w_{t+1}^{k,j},\ n_{k,j} \right\}_{k \in K}^{S_j}$, where $n_k$ indicates the size of the dataset of the $k^{th}$ client. Each server first calculates its own $w_{t+1}^j \leftarrow \sum_{k=1}^{k \in s_j} n_{k,j} w_{t+1}^{k,j}$, and $n_j = \sum_{k=1}^{k \in s_j} n_{k,j}$. The primary node triggers data aggregation between the servers to obtain $w_{t+1}^{j}$ and $n_j$ that are obtained through aggregation calculation. The servers can obtain calculation results based on clusters, that is, the full data. In the next round of iteration, the client can request, from any server, to obtain the correct full data.

In addition, the first server may also send the first aggregation information to the second server, so that the second server aggregates, for another time, the second aggregation information obtained through aggregation by the second server and the received first aggregation information, to obtain the third aggregation information. Usually, to maintain heterogeneity of the data in the servers, the second server may use a same aggregation mode as an aggregation mode of the first server when performing aggregation, to finally obtain the same third aggregation information, so that each server may have the full data.

408: The first server updates the stored global model.

After the third aggregation information is obtained, the third aggregation information may include a weight parameter of an aggregated model, and the first server may update the locally stored global model by using the weight parameter obtained through final aggregation, to obtain the updated global model.

Therefore, in this implementation of this application, the client may access the server in a manner of sending the request to the server, and may participate in federated learning after being allowed by the server. This is equivalent to that the client accesses the server in a loose mode without maintaining the persistent connection to the server. This is applicable to some scenarios in which a client is deployed on a mobile terminal. In addition to aggregating the model update parameters fed back by the clients connected to the servers, the servers may further aggregate information obtained through aggregation by another server, so that the servers may have the full data in the federated learning system, and the client can obtain the full data when accessing the server at any moment. In this way, output precision of the final trained model is high.

In addition, in this application, the timer and/or the counter may be set to count the clients that access the server, and timing is performed in the process of the federated learning. Federated learning is performed in the time window of the timer. If one process of iterative learning is not completed in the time window, a next round of learning may be directly performed. This avoids that a process of overall training is affected by unstable connections or low training efficiency of some clients, and improves the overall learning efficiency of the federated learning. In addition, the client may quit at any time in a process of performing federated training, without affecting the efficiency of the federated learning. This avoids a case the client is bound.

It should be noted that the foregoing steps 401 to 408 may be one process of iteration in the process of the federated learning, and the process of the federated learning may include one or more iterations. In this application, only one iteration is used as an example for description, and this is not a limitation. Specifically, a quantity of iterations may be determined based on an actual application scenario.

409: The client sends a query message to the first server.

When the client (or referred to as the second client) needs to obtain the latest model, the client may send the query message to the server, to request to query the latest global model.

Specifically, the client may access the federated learning system by using an address of the federated learning system, and the ELB may route the query message sent by the client, to route the request message to the adapted server. Herein, the sending of the query message by the client to the first server is merely an example for description. The first server herein may be replaced with another server, for example, the second server or a third server. This is not limited herein.

410: The first server delivers the updated global model to the client.

After receiving the query message from the client, the first server may deliver the latest local model to the client.

In the foregoing step 408, the first server updates the stored global model by using the latest aggregation information, and may deliver the latest global model to the client after receiving the query message. Specifically, a structure and parameters of the model may be delivered to the client, for example, a quantity of layers of a neural network, a size of a convolution kernel, input and output resolution, and weight parameters at network layers, so that the client obtains the structure of the latest model.

It should be noted that step 409 and step 410 in this application are optional steps.

In this implementation of this application, the servers may transmit the latest aggregation information to each other, so that the servers in the federated learning system have the full data, and the client can obtain the full data when accessing the server at any moment without maintaining the persistent connection to the server. This improves accuracy of the model that can be obtained by the client.

The foregoing describes a procedure of the federated learning method provided in this application. For ease of understanding, the federated learning method provided in this application is described in more detail below with reference to a specific application scenario.

First, an example is used to describe the federated learning system to which the federated learning method provided in this application is applied.

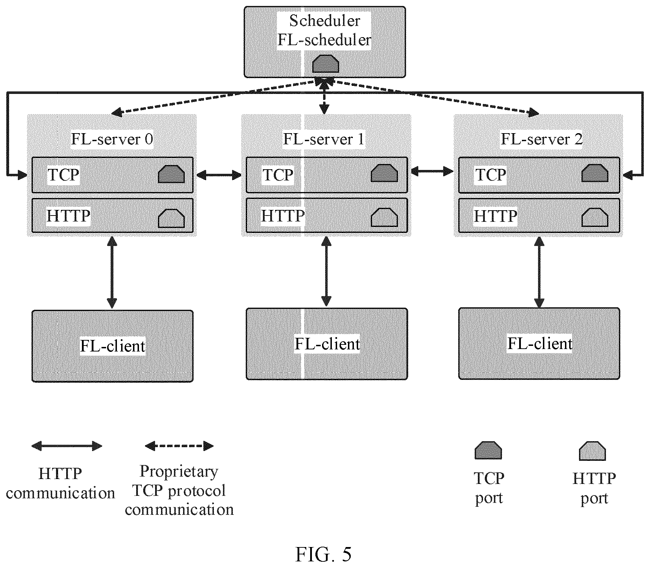

For example, the federated learning system provided in this application may be shown in FIG. 5. Three servers (that is, an FL-server 0, an FL-server 1, and an FL-server 2) are used as an example for description herein, or may be replaced with more servers. The scheduler (that is, the FL-scheduler) may be configured to schedule a communication resource or a storage resource in a server cluster, so that data can be exchanged between the servers.

A transmission control protocol (transmission control protocol, TCP) connection may be established between the servers or between the server and the scheduler, a stable and persistent connection is maintained, and communication is performed according to a TCP proprietary protocol. Certainly, the TCP herein may alternatively be replaced with another protocol, for example, an Internet packet exchange (Internet packet exchange, IPX) protocol or a sequenced packet exchange (sequenced packet exchange, SPX) protocol. This is not limited in this application.

The client may access the federated learning system by using an IP address. The server exposes a hypertext transfer protocol (hypertext transfer protocol, HTTP) port externally, to provide a distributed service externally. The client may establish an HTTP connection, that is, a non-persistent connection, to the server.

The server 0 may be used as the primary node, and another server is used as a secondary node. The primary node is responsible for synchronizing the data within the cluster, for example, triggering aggregation of all nodes, performing global timing, or performing counting during federated learning, to ensure data consistency within the cluster.

Usually, if the client is deployed on the mobile terminal, the server may not be able to obtain a status of the client at any time. For example, a connection between the mobile terminal and the server may be unstable, and the mobile terminal cannot be found or a connection status of the mobile terminal cannot be obtained. As a result, communication between the server and the mobile terminal may be interrupted. This may affect the efficiency of the federated learning.

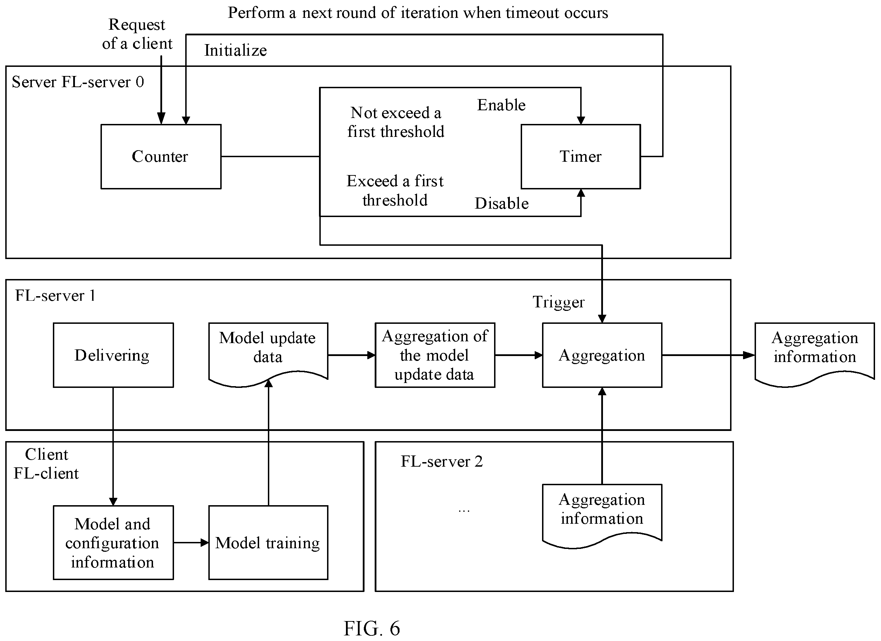

FIG. 6 is a schematic flowchart of another federated learning method according to this application.

First, before each round of iteration, a timer and a counter may be initialized, for example, set to 0. In each round of iteration, after a federated learning system receives a first request message sent by a client, the counter on a primary node may perform counting. When the counter starts counting, the timer may be enabled synchronously, and one round of federated learning is performed in a time window of the timer.

If the counter exceeds a first threshold, the timer may be disabled, and the client that sends the request in the current round of iteration is used as a client that performs training in the current round of federated learning. The first threshold may be determined based on a quantity of clients that participate in federated learning in a previous round. For example, if the quantity of clients that participate in federated learning in the previous round is less than a quantity of clients in a round of iteration previous to the previous round, the already set first threshold may be reduced. If the quantity of clients that participate in federated learning in the previous round is greater than a quantity of clients in a round of iteration previous to the previous round, the already set first threshold may be increased. In this way, the threshold corresponding to the counter is adapted to the quantity of clients that participate in training in each round of iteration, and training efficiency is maximized.

One FL-server 1 and one FL-client are used as an example. The FL-server 1 may deliver a to-be-trained global model and a training configuration parameter to the FL-client. The global model may include various neural networks such as a DNN, a CNN, a residual network (ResNet), or a constructed network. This may be specifically adjusted based on an actual application scenario. The training configuration parameter may include a parameter related to model training, for example, a learning rate, a quantity of epochs, or a security algorithm type. The training configuration parameter is used to determine, when the client performs model training, a learning rate or a quantity of iterations during training, an encryption algorithm type during data transmission, or the like.

After performing model training by using the training configuration parameter and a locally stored training sample, the FL-client may feed back obtained model update parameters to the FL-server 1. The model update parameters may include a parameter related to a trained model, for example, a structure (for example, a depth or a width of a network layer) of the updated global model, a weight parameter, or a weight parameter obtained through sparsity reduction.

In this embodiment, only one FL-client is used as an example for description. Usually, there may be a plurality of FL-clients. Each FL-client may train the received global model by using a locally stored training sample. For example, each training sample includes a sample and a corresponding truth label. In a training process, the sample is used as an input of the model, and then a difference between an output of the model and the truth label is measured by using a loss function, and an update gradient of the global model is calculated by using the difference. The gradient is used to reversely update the weight parameter of the global model, to obtain the updated model.

If the FL-server 1 receives model update parameters fed back by the plurality of FL-clients, the FL-server 1 may aggregate the model update parameters fed back by the plurality of FL-clients. This is equivalent to data reduction. A specific aggregation mode may include summation, averaging, weighted summation, and the like, and may be specifically adjusted based on an actual application scenario. For example, data obtained by the FL-server 1 by aggregating model update data may be represented as $w_{t+1} \leftarrow \sum_{k=1}^{k \in S} n_k w_{t+1}^k$. $S$ is a client set, $w_{t+1}^k$ indicates the model update parameters fed back by the clients, and $n_k$ indicates a size of the model update parameters fed back by each client.

When a value of the counter exceeds the first threshold, the primary node, that is, an FL-server 0, triggers a server in which the primary node is located and secondary nodes (such as the FL-server 1 and the FL-server 2) to aggregate, for another time, aggregation information transmitted between the servers. It should be noted that, for ease of understanding, only an example in which the FL-server 0 triggers the secondary node to perform aggregation is used for description herein. For example, when triggered by the FL-server 0, the FL-server 2 sends, to the FL-server 1, the aggregation information obtained by aggregating the received model update parameters, and the FL-server 1 aggregates the received aggregation information and locally stored aggregation information, to obtain final aggregation information.

In a process of a round of iteration of performing federated learning, if the value of the counter does not exceed the first threshold but the timer times out, the current iteration may be terminated, and a next round of iteration is performed, that is, the counter is initialized. For example, the FL-server 0 sends a second trigger indication to the FL-server 1 and the FL-server 2, to indicate to enter the next round of iteration. In this case, data in the process of the current iteration may be discarded or used. For example, if the data is complete, the data may continue to be used, and only data of some clients that do not respond is discarded. This may be specifically adjusted based on an actual application scenario.

Therefore, in this implementation of this application, the primary node may maintain the counter and the timer, to count clients that send requests. When a value of the timer reaches a threshold, an aggregation operation based on clusters may be triggered, that is, the servers aggregate received aggregation information of another server for another time, so that the servers can have the aggregation information of the another server, and each server can have full data. The client can obtain the full data when accessing any server at any moment. This improves efficiency of the federated learning. In addition, the primary node further maintains the timer. When the timer times out, the next round of iteration may be performed. This is equivalent to performing only one round of iterative learning in the time window of the timer, to prevent the efficiency of the federated learning from being affected due to excessively long duration of waiting for a response from the client. This resolves long tail effect caused by client straggling.

In addition, in the federated learning system provided in this application, the primary node is used as an important node for monitoring duration of each round of iteration and the quantity of clients that participate in the iteration, and may be mainly configured to perform the following steps.

After any one of a plurality of servers receives the first request message, the primary node starts the counter and the timer. The counter is configured to count request messages received by the plurality of servers in the one round of iteration, and the request message is used to request to obtain a global model stored in a corresponding server of the plurality of servers. If the value of the counter reaches the first threshold, the primary node sends a first trigger indication to each of the plurality of servers, where the first trigger indication indicates the plurality of servers to transmit locally stored information to each other. If the value of the counter does not reach the first threshold, and a value of the timer reaches a second threshold, the primary node sends the second trigger indication to each server, where the second trigger indication indicates each server to perform the next round of iteration.

In an implementation of this application, one server in the federated learning system is used as the primary node, and the primary node maintains the timer and the counter. In the process of each round of iteration, the received request messages are counted by using the counter, and timing is performed by using the timer. Therefore, the quantity of clients that participate in each round of iteration and training duration of each round of iteration are limited. This avoids meaningless waiting caused by the client straggling, improves the overall efficiency of the federated learning, and avoids long tail effect.

In a possible implementation, the first threshold is a preset value, or the first threshold is related to the quantity of clients that access the federated learning system in the process of the previous round of iteration. Therefore, in this implementation of this application, the first threshold corresponding to the counter may be the preset value, or may be the value determined based on the quantity of clients that access all the servers in the federated learning system. Usually, the first threshold is not greater than the quantity of clients that access the federated learning system. Therefore, this avoids the excessively long duration of waiting, of the federated learning, caused by waiting for the client to access, and improves the overall efficiency of the federated learning.

In a possible implementation, the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client. Therefore, in this implementation of this application, a time window of each round of iteration may be set by using the timer. When the timer times out, the next round of iterative learning may be performed. This avoids long tail effect caused by the excessively long duration of waiting. Even if the client quits during federated learning, the overall training efficiency of the federated learning is not affected.

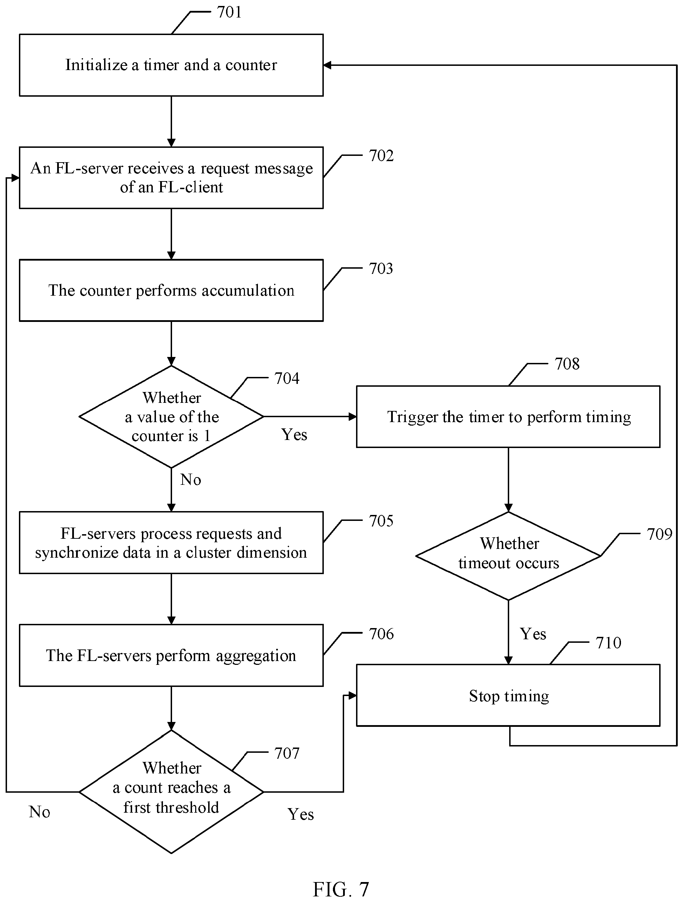

For ease of understanding, refer to FIG. 7. The following describes an example with reference to a procedure executed by the primary node and the servers in the federated learning system.

701: Initialize the counter and the timer.

Before each round of iteration is performed, the counter and the timer are initialized, for example, both the counter and the timer are set to 0. The counter and the timer may be maintained by the primary node, as shown in the FL-server 0 described above in FIG. 5.

For example, at the beginning of each round of iteration, the counter is initialized, and a quantity of request messages of clients that participate in the current round of iteration is set, for example, set to C. Usually, the value may be set to a subset of a quantity of clients that are communicatively connected to the server. In other words, the value is usually less than the quantity of clients connected to the server, to avoid the excessively long duration of waiting for the client in each round of iteration. In the federated learning system, if 100 clients are connected to the server and only 10 clients need to participate in federated learning, and the value of C is set to an excessively large value, the duration of waiting for the participation of the client may be excessively long, and the efficiency of the federated learning is reduced.

702: The FL-server receives a request message of the FL-client.

The request message sent by the FL-client may be routed by the ELB to the FL-server. The FL-server may be any server in the federated learning system, for example, any one of the FL-server 0, the FL-server 1, or the FL-server 2 in FIG. 5.

In addition, after receiving the request message of the FL-client, the FL-server may determine whether to allow the FL-client to participate in federated learning. For example, a random selection mode, a first-come-first-served selection mode, or another selection mode may be used to determine whether the FL-client is allowed to participate in federated learning. For example, a connection status, for example, a delay or communication duration, of the FL-client may further be determined by using the request message. Alternatively, when a status of the FL-client is determined by using the request message, for example, a battery level is excessively low or load is excessively high, the FL-client may not be allowed to participate in federated learning, to prevent the FL-client from affecting the efficiency of the federated learning.

703: The counter performs accumulation.

When the FL-server receives request messages of FL-clients, the primary node may also record a quantity of FL-clients that send the request messages, and the counter performs accumulation.

704: Determine whether the value of the counter is 1. If yes, step 708 is performed, or if no, step 705 is performed.

After the counter performs accumulation, the value of the counter may be monitored. If the value of the counter is 1, that is, a request message sent by a first client is received in the process of the current round of iteration, the timer may be enabled, that is, step 709 is performed. In this case, the data does not need to be synchronized because only the request message sent by one client is received. After request messages sent by a plurality of clients are received, the data may be synchronized based on clusters subsequently, so that the servers in the cluster maintain data consistency, that is, step 705 is performed.

705: FL-servers process requests and synchronize the data based on clusters.

After the request messages sent by the plurality of FL-clients are received, the model and the training configuration parameter may be delivered to all or some of the plurality of FL-clients. The FL-client trains the model by using the locally stored training sample based on the training configuration parameter, and feeds back related data of the trained model to the FL-server.

If the plurality of FL-clients participate in federated learning, the FL-server may receive model update parameters fed back by the plurality of FL-clients, and the FL-server may aggregate the received model update parameters fed back by the plurality of FL-clients, to obtain aggregation information (that is, first aggregation information). The FL-servers may synchronize aggregation information obtained through calculation by the FL-servers, thereby synchronizing the databased on clusters.

706: The FL-servers perform aggregation.

After synchronizing the respective aggregation information between the FL-servers, the FL-servers may aggregate the aggregation information (that is, the first aggregation information) obtained through aggregation by the FL-servers, and aggregation information (that is, second aggregation information) sent by another FL-server, to obtain final global aggregation information (that is, third aggregation information). In this way, the FL-servers can have the full data.

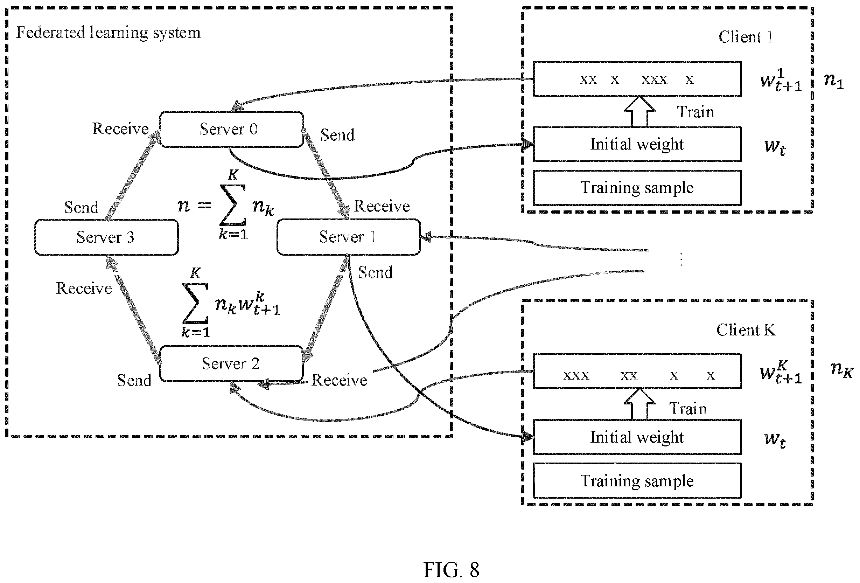

For example, a manner of performing aggregation between the FL -servers may be specifically shown in FIG. 8. The federated learning system includes a plurality of servers, and the plurality of servers are connected to each other in a ring, for example, a server 0, a server 1, a server 2, a server 3, and the like shown in FIG. 8. Herein, only the four servers are used as an example for description. In an actual application scenario, the four servers may be replaced with more or fewer servers. This is not limited herein. Clients include K clients connected to the servers such as a client 1 to a client K shown in FIG. 8. Each client receives an initial weight $w_t$ sent by an accessed server, and then trains, by using a locally stored training sample, a model corresponding to the initial weight, to obtain a weight $w_{t+1}^1 - w_{t+1}^K$ of the trained model and a corresponding data amount $n_1 - n_k$, where $n_k$ indicates a size of a dataset of the $k^{th}$ client. Then, the weight of the trained model and the data amount are fed back to the accessed server. For example, the client 1 feeds back the weight of the trained model to the server 0, the client K feeds back the weight of the trained model to the server 2, and the like. The server $j$ aggregates the received weights sent by the clients, to obtain $w_{t+1}^j \leftarrow \sum_{k=1}^{k \in s_j} n_{k,j} w_{t+1}^{k,j}$, and $n_j = \sum_{k=1}^{k \in s_j} n_{k,j}$. The primary node triggers the servers to aggregate the data transmitted between the servers, to obtain the aggregation information. For example, the data aggregated by the servers is represented as $w_{t+1}^j$ and $n_j$.

707: Whether the count reaches the first threshold. If yes, step 710 is performed, or if no, step 702 is performed.

In the process of the current round of iteration of the federated learning, the value of the counter may be monitored in real time. If the count of the counter reaches the first threshold, it indicates that the quantity of clients that participate in the process of the current round of iteration of the federated learning is sufficient, and there is no need to add more clients to participate in the current round of federated learning. In other words, timing is stopped, and the process of the next round of iteration of the federated learning is performed, that is, step 710 is performed.

708. Trigger the timer to perform timing.

In the process of each round of iteration of the federated learning, after the first request message sent by the client is received, the timer may be triggered to start timing.

For example, when or after the ELB routes the first request message to the corresponding server, the ELB further notifies the primary node that the first request message has been received. After receiving the notification message from the ELB, the primary node may start the timer and the counter, to count the request messages received by the federated learning system, and perform timing on the process of the current round of iteration.

709: Whether timeout occurs. If yes, step 710 is performed.

In the process of each round of iterative learning, a status of the timer may be monitored in real time, and whether the timer times out is determined. If the timer times out, timing is stopped, and the next round of iterative learning is performed.

It may be understood that this is equivalent to setting the time window by using the timer, and the process of the current round of iterative learning is performed in the time window of the timer. If the time window is exceeded, the next round of iteration may be performed. This avoids that duration consumed by each round of iteration is excessively long.

Request messages or data, sent by the client, received in a time window T of the timer may be normally processed by the server. For example, the server encrypts and decrypts, or aggregates the received data. If the counter does not reach C outside the time window T, both the timer and the counter are reset to initial statuses, and the next round of iteration is performed. If the counter reaches C within the time window T, timing of the timer is stopped, and after the data sent by the client in the current round of iteration is processed, the next round of iteration is performed. Therefore, in this implementation of this application, on the basis of cooperation between the counter and the timer, longest time consumed by each round of iteration is duration of the time window T. In addition, in the process of iteration, communication duration of each round of iteration may be recorded, to dynamically adjust the duration of the time window. In this way, long tail effect of the client is eliminated, and the training efficiency is improved.

In addition, optionally, a function of the timer may also be triggering the servers in the cluster to synchronize the data with each other, that is, the foregoing steps 705 and 706. After the steps 705 and 706 are completed, the next round of iteration may be performed. This may be specifically adjusted based on an actual application scenario.

710: Stop timing.

After the timer stops timing, it indicates that the current round of iterative learning ends. After the timer and the counter are initialized, the next round of iteration may be performed, that is, step 701 is performed.

Step 702, step 705, and step 706 may be performed by any FL-server in the cluster, and step 701, step 703, step 704, and step 707 to step 710 are performed by the primary node.

Therefore, in this implementation of this application, the client may access the server by combining the request and the response, and monitor, by setting the counter and the timer, the client that participates in each round of iteration and the iteration duration of each round of iteration. Even if the client quits in the middle of the federated learning, an overall process of the federated learning of the cluster is not affected. This avoids a tail problem caused by failure of addressing the client, and improves the overall efficiency of the federated learning. In addition, the servers may synchronize the data with each other, that is, each server has the full data in the cluster, and the client can obtain the full data when accessing any server at any moment. This improves accuracy of the model obtained by the client.

For example, that a simple classification network is trained is used as an example. A federated learning system may include a plurality of servers, and a client is deployed on a mobile terminal of a user, for example, a mobile terminal such as a mobile phone, a camera, or a tablet computer. The mobile terminal may capture an image by using a camera. The user may manually mark, in an album, a type of an object in the shot image, for example, a "cat" or a "dog" in the image. The mobile terminal may use the image manually marked by the user as a training sample. When a quantity of training samples reaches a specific quantity, the mobile terminal may request, from the federated learning system, to participate in federated learning, to apply data collected by the mobile terminal to the classification network.

The mobile terminal may obtain an HTTP port exposed by the federated learning system, and send a request message to the cluster through the HTTP port. A counter set on a primary node counts request messages, and the primary node further maintains a timer. An upper limit value of the counter may be preset, or may be determined based on a quantity of clients that participate in a previous round of iteration, or may be determined based on a quantity of clients that are connected to the cluster. An upper limit value of the timer may be preset, may be determined based on duration in the previous round of iteration, or the like.

In addition, if the request message sent by the mobile terminal is a first request message sent in a process of a current round of iteration, the timer is enabled. If the request message sent by the mobile terminal is a last request message in the current round of iteration, that is, a value of the counter reaches a preset first threshold, the mobile terminal is a last client that participates in federated learning and that is determined in the current round of iteration. After completing model training, the mobile terminal may enter a next round of iterative learning.

An ELB in the cluster routes the request message from the mobile terminal to an adapted server. The server determines whether to allow the mobile terminal to participate in federated learning. If the server allows the mobile terminal to participate in federated learning, the server delivers a locally stored classification network to the mobile terminal, and delivers training configuration parameters such as a learning rate used during training and a data encryption/decryption mode. The mobile terminal trains the classification network by using a locally collected training sample and based on the training configuration parameter, to obtain the trained classification network. The mobile terminal feeds back weight parameters of the trained classification network to the server. If a moment at which the server receives the weight parameters is in a time window of the timer, the server aggregates the received weight parameters, to obtain first aggregation information.

The servers may transmit, to each other, information obtained through aggregation, so that each server has full data. The mobile terminal may send a query message to the server at any moment, to query a latest classification network, and the server may send the stored latest classification network to the mobile terminal, so that the mobile terminal can obtain latest full data when accessing any server at any moment.

Therefore, in this implementation of this application, when the client is deployed on the mobile terminal, the client may access the federated learning system and participate in federated learning in a loose mode by combining the request and a response. A stable and persistent connection does not require to be maintained. This is applicable to a scenario in which the client is deployed on the mobile terminal. In addition, the timer and the counter are further deployed on the federated learning system. Low efficiency, of the federated learning, caused by waiting for the client is avoided through cooperation between the timer and the counter. This reduces long tail effect, and improves the overall efficiency of the federated learning. In addition, the upper limit value of the timer or counter may be adjusted based on information in the process of the previous round of iterative training or processes of previous rounds of iterative training, and the upper limit value of the timer or counter may be dynamically adjusted based on an actual scenario, to further improve the efficiency of the federated learning.

The foregoing describes in detail the federated learning system and the procedure of the federated learning method provided in this application, and the following describes a structure of a server provided in this application.

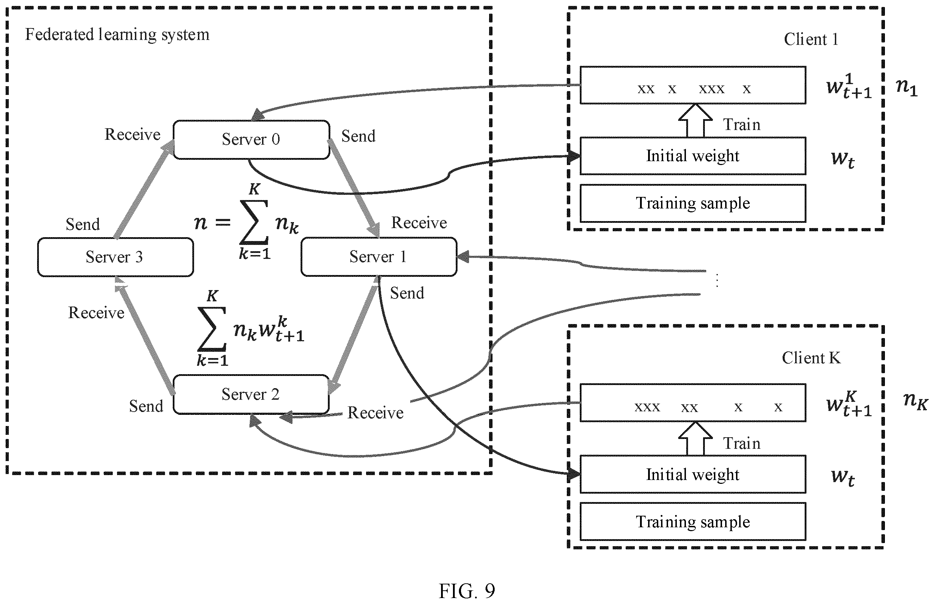

Refer to FIG. 9. This application provides a schematic diagram of a structure of a server. The server is applied to a federated learning system. The federated learning system includes a plurality of servers and a plurality of clients, the plurality of servers are configured to perform iterative federated learning, and any one of the plurality of servers includes:

a transceiver module 901, configured to receive a request message sent by at least one first client, where the request message is used to request a global model stored in a first server, and the plurality of clients include the at least one first client, where

the transceiver module 901 is further configured to send a training configuration parameter and information about the global model to the at least one first client, where the training configuration parameter and the information about the global model indicate the at least one first client to train the global model by using the training configuration parameter; and

the transceiver module 901 is further configured to receive first model update parameters separately fed back by the at least one first client, where the first model update parameters are parameters of the global model obtained through training by the at least one first client;

an aggregation module 902, configured to aggregate the first model update parameters fed back by the at least one first client, to obtain first aggregation information in a current round of iteration, where

the transceiver module 901 is further configured to obtain second aggregation information sent by a second server, where the second aggregation information is information obtained by the second server by aggregating received second model update parameters in the current round of iteration; and

an update module 903, configured to update, based on the first aggregation information and the second aggregation information, the global model stored on the first server, to obtain the updated global model.

In a possible implementation, the transceiver module is further configured to receive the second aggregation information separately sent by a plurality of second servers.

The update module 903 is specifically configured to update, based on the first aggregation information and the second aggregation information that is separately sent by the plurality of second servers, the global model stored on the first server, to obtain the updated global model.

According to the invention, the first server is a primary node in the federated learning system, and the primary node is configured to manage the plurality of servers.

The transceiver module is further configured to send a first trigger indication to the second server, where the first trigger indication indicates the second server to send the second aggregation information to the first server.

The transceiver module 901 is further configured to receive the second aggregation information in the second server.

According to the invention, a counter is disposed in the first server, and the counter is configured to count a quantity of request messages received by the plurality of servers.

The transceiver module 901 is specifically configured to: when a value of the counter meets a first threshold, send the first trigger indication to the second server.

In a possible implementation, the first threshold is a preset value, or the first threshold is related to a quantity of clients that access the federated learning system in a process of a previous round of iteration.

In a possible implementation, the primary node includes a timer, and the timer starts timing after a first request message is received in each round of iteration.

The transceiver module 901 is specifically configured to: when a value of the timer exceeds a second threshold, receive a second trigger indication sent by the primary node, where the second trigger indication indicates to perform a next round of iterative learning.

In a possible implementation, the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client.

In a possible implementation, the transceiver module is further configured to receive a query message sent by a third client, where the third client includes any client that accesses the federated learning system.

The transceiver module 901 is further configured to send information about the updated global model to the third client corresponding to the query message.

In a possible implementation, the transceiver module is further configured to send the first aggregation information to the second server. In this way, the second server updates the locally stored global model based on the first aggregation information and the second aggregation information, to obtain the updated global model.

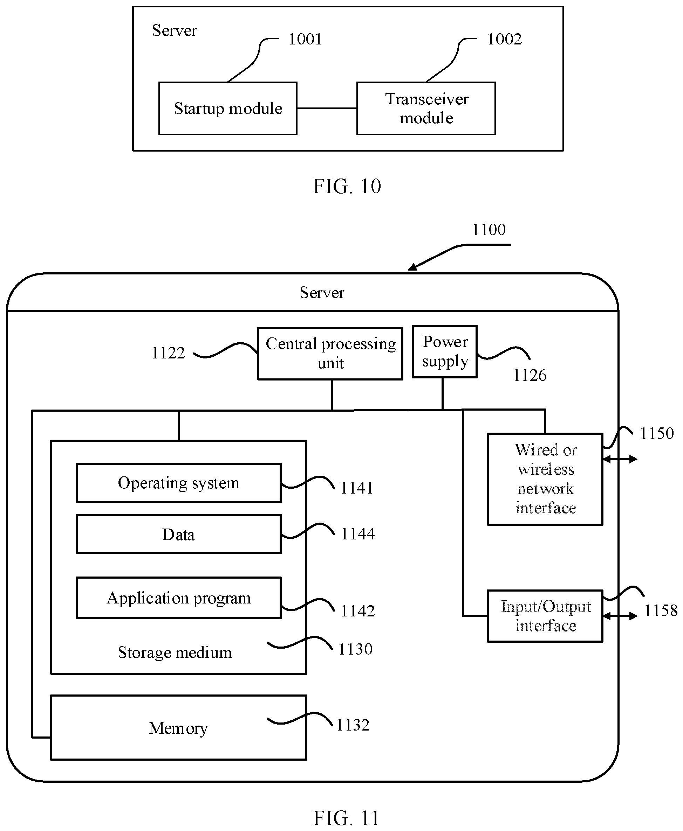

Refer to FIG. 10. This application provides a schematic diagram of a structure of another server, that is, the foregoing primary node. The server is applied to a federated learning system. The federated learning system includes a plurality of servers, one of the plurality of servers is used as the primary node, and the plurality of servers are configured to perform iterative learning to implement federated learning. The primary node includes:

a startup module 1001, configured to: after any one of the plurality of servers receives a first request message, start a counter and a timer, where the counter is configured to count request messages received by the plurality of servers in one round of iteration, and the request message is used to request to obtain a global model stored in a corresponding server of the plurality of servers, and

a transceiver module 1002, configured to: if a value of the counter reaches a first threshold, send a first trigger indication to each of the plurality of servers, where the first trigger indication indicates the plurality of servers to transmit locally stored information to each other.

The transceiver module 1002 is further configured to: if the value of the counter does not reach the first threshold, and a value of the timer reaches a second threshold, send a second trigger indication to each server, where the second trigger indication indicates each server to perform a next round of iteration.

In a possible implementation, the first threshold is a preset value, or the first threshold is related to a quantity of clients that access the federated learning system in a process of a previous round of iteration.

In a possible implementation, the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client.

An embodiment of this application further provides a server. FIG. 11 is a schematic diagram of a structure of a server according to an embodiment of this application. The server described in the embodiment corresponding to FIG. 9 may be deployed on the server 1100, and the server 1100 is configured to implement functions of the server in embodiments corresponding to FIG. 4 to FIG. 8. Specifically, the server 1100 may vary greatly based on different configurations or performance. The server 1100 may include one or more central processing units CPU 1122 (for example, one or more processors), a memory 1132, and one or more storage media 1130 (for example, one or more mass storage devices) for storing an application program 1142 or data 1144.

The memory 1132 and the storage medium 1130 may perform transitory storage or persistent storage. In an embodiment, the memory 1132 is a random access memory RAM, may directly exchange data with the central processing unit 1122, and is configured to load the data 1144, the application program 1142, and/or an operating system 1141 for direct running and use of the central processing unit 1122. The memory 1132 is usually used as a temporary data storage medium for the operating system or another running program. The program stored in the storage medium 1130 may include one or more modules (not shown in FIG. 11), and each module may include a series of instruction operations to be performed on the server.

Further, the central processing unit 1122 may be set to communicate with the storage medium 1130, and execute, on the server 1100, the series of instruction operations in the storage medium 1130. In a possible implementation, the storage medium 1130 stores program instructions and data corresponding to the method steps shown in any one of the foregoing embodiments in FIG. 4 to FIG. 8.

The server 1100 may further include one or more power supplies 1126, one or more wired or wireless network interfaces 1150, one or more input/output interfaces 1158, and/or one or more operating systems 1141 such as Windows Server™, Mac OS X™, Unix™, Linux™ and FreeBSD™.

In a possible implementation, the central processing unit 1122 is configured to perform the method steps performed by the server shown in any one of the foregoing embodiments in FIG. 4 to FIG. 8.

An embodiment of this application further provides a federated learning apparatus. The federated learning apparatus may also be referred to as a digital processing chip or a chip. The chip includes a processing unit and a communication interface. The processing unit may obtain program instructions through the communication interface, and when the program instructions are executed by the processing unit, the processing unit is configured to perform the method steps performed by the server in any one of the foregoing embodiments in FIG. 4 to FIG. 8.

An embodiment of this application further provides a digital processing chip. A circuit and one or more interfaces that are configured to implement functions of the central processing unit 1122 or the central processing unit 1122 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the server in the foregoing embodiments.

In more detail, when the federated learning apparatus in this embodiment of this application is a chip. The chip specifically includes a processing unit and a communication unit. The processing unit may be, for example, a processor, and the communication unit may be, for example, an input/output interface, a pin, a circuit, or the like. The processing unit may execute computer-executable instructions stored in a storage unit, so that the chip in the server performs the federated learning method described in embodiments shown in FIG. 4 to FIG. 8.

Optionally, the storage unit may be a storage unit in the chip, for example, a register or a cache; or the storage unit may alternatively be a storage unit that is in a radio access device end and that is located outside the chip, for example, a read-only memory (read-only memory, ROM), another type of static storage device that can store static information and instructions, a random access memory RAM, or the like.

Specifically, the processing unit or the processor may be a central processing unit, a network processor (neural network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. A general purpose processor may be a microprocessor or any regular processor or the like.

The processor mentioned above may be a general-purpose central processing unit, a microprocessor, an ASIC, or one or more integrated circuits for controlling program execution of the methods in FIG. 4 to FIG. 8.

An embodiment of this application further provides a computer-readable storage medium. The computer-readable storage medium stores a program. When the program is run on a computer, the computer is enabled to perform the steps in the methods described in embodiments shown in FIG. 4 to FIG. 8.

An embodiment of this application further provides a computer program product. When the computer program product runs on a computer, the computer is enabled to perform the steps performed by the server in the methods described in embodiments shown in FIG. 4 to FIG. 8.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the prior art may be implemented in a form of a software product. The computer software product is stored in a readable storage medium, for example, a floppy disk, a USB flash drive, a removable hard disk, a read-only memory ROM, a random access memory RAM, a magnetic disk, or an optical disc of a computer, and includes several instructions for instructing a computer device (which may be a personal computer, a server, a network device, or the like) to perform the methods described in embodiments of this application.

All or some of foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In this application, terms such as "first", "second", "third", and "fourth" (if exists) in the specification, the claims, and the accompanying drawings are intended to distinguish between similar objects but do not necessarily indicate a specific order or sequence. It should be understood that the data used in such a way are interchangeable in proper cases, so that embodiments described herein can be implemented in an order other than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

## Claims

1. A federated learning method performed by a plurality of servers of a federated learning system, wherein the federated learning system comprises the plurality of servers and a plurality of clients, the plurality of servers comprise a first server and a second server, and the plurality of servers are configured to perform the federated learning method, the method comprising an iterative learning process, and in any one round of iteration the method comprises:

   receiving (401), by the first server, a request message sent by at least one first client of the plurality of clients, wherein the request message is used to request a global model stored in the first server;
   sending (402), by the first server, a training configuration parameter and information about the global model to the at least one first client;
   receiving (404), by the first server, first model update parameters separately fed back by the at least one first client, wherein the first model update parameters are parameters of a global model trained by the at least one first client;
   aggregating (405), by the first server, the first model update parameters fed back by the at least one first client, to obtain first aggregation information in a current round of iteration;
   obtaining (406), by the first server, second aggregation information sent by the second server, wherein the second aggregation information is information obtained by the second server by aggregating received second model update parameters in the current round of iteration; and
   updating (408), by the first server based on the first aggregation information and the second aggregation information, the global model stored on the first server, to obtain the updated global model;
   wherein the first server is a primary node in the federated learning system, the primary node is configured to manage the plurality of servers, and the obtaining (401), by the first server, second aggregation information sent by the second server further comprises:

sending, by the first server, a first trigger indication to the second server, wherein the first trigger indication indicates the second server to send the second aggregation information to the first server; and
receiving, by the first server, the second aggregation information from the second server;
wherein a counter is disposed in the first server, the counter is configured to count the request messages received by the plurality of servers in the one round of iteration, and the sending, by the first server, a first trigger indication to the second server comprises:
when a value of the counter meets a first threshold, sending, by the first server, the first trigger indication to the second server.

2. The method according to claim 1, wherein the plurality of servers comprise a plurality of second servers, and the obtaining, by the first server, second aggregation information sent by the second server comprises:

receiving, by the first server, the second aggregation information separately sent by the plurality of second servers; and
the updating (408), by the first server based on the first aggregation information and the second aggregation information, the global model stored on the first server, to obtain the updated global model comprises:
updating, by the first server based on the first aggregation information and the second aggregation information that is separately sent by the plurality of second servers, the global model stored on the first server, to obtain the updated global model.

3. The method according to claim 1 or 2, wherein the first threshold is a preset value, or the first threshold is related to a quantity of clients that access the federated learning system in a process of a previous round of iteration.

4. The method according to any one of claims 1 to 3, wherein the primary node comprises a timer, the timer starts timing after a first request message is received in each round of iteration, and the method further comprises:
when a value of the timer exceeds a second threshold, sending, by the first server, a second trigger indication to the second server, wherein the second trigger indication indicates the second server to perform a next round of iteration.

5. The method according to claim 4, wherein the second threshold is a preset value, the second threshold is related to the quantity of clients that access the federated learning system in the previous round of iteration, or the second threshold is related to a value of a data amount for communication, in the previous round of iteration, between each server in the federated learning system and a corresponding client.

6. The method according to any one of claims 1 to 5, wherein the method further comprises:

receiving (409), by the first server, a query message sent by a third client, wherein the third client comprises any client that accesses the federated learning system; and
sending (410), by the first server, information about the updated global model to the third client corresponding to the query message.

7. The method according to any one of claims 1 to 6, wherein the method further comprises:
sending, by the first server, the first aggregation information to the second server, to enable the second server to update, based on the first aggregation information and the second aggregation information, the locally stored global model to obtain the updated global model.

8. A federated learning system, comprising a plurality of servers and a plurality of clients, wherein the plurality of servers comprise a first server and a second server, both the first server and the second server store information about a global model, the plurality of servers are configured to perform a federated learning method, the method comprising an iterative learning process, and in any one round of iteration:

the first server is configured to receive a request message separately sent by at least one first client of the plurality of clients, wherein the request message is used to request a global model stored in the first server;
the first server is configured to send, for the request message separately sent by the at least one first client, a training configuration parameter and the information about the global model to the at least one first client;
the first server is configured to receive first model update parameters separately fed back by the at least one first client, wherein the first model update parameters are parameters of the global model obtained through training by the at least one first client;

the first server is configured to aggregate the first model update parameters separately fed back by the at least one first client, to obtain first aggregation information;

the second server is configured to: receive second model update parameters sent by at least one corresponding second client of the plurality of clients, and aggregate the second model update parameters sent by the at least one second client, to obtain second aggregation information;

the first server is configured to obtain second aggregation information sent by the second server; and

the first server is configured to update, based on the first aggregation information and the second aggregation information that is sent by the second server, the global model stored on the first server, to obtain the updated global model;

wherein the first server is a primary node in the federated learning system, the primary node is configured to manage the plurality of servers, and the first server is configured to obtain the second aggregation information sent by the second server by: sending a first trigger indication to the second server, wherein the first trigger indication indicates the second server to send the second aggregation information to the first server; and receiving the second aggregation information from the second server;

wherein a counter is disposed in the first server, the counter is configured to count the request messages received by the plurality of servers in the one round of iteration, and the first server is further configured to send the first trigger indication to the second server when a value of the counter meets a first threshold.

9. The system according to claim 8, wherein there are a plurality of second servers comprised in the plurality of servers;

each of the plurality of second servers is configured to: receive the second model update parameters sent by the at least one corresponding second client, and aggregate the second model update parameters sent by the at least one second client, to obtain the second aggregation information;

the first server is specifically configured to receive the second aggregation information separately sent by the plurality of second servers; and

the first server is specifically configured to update, based on the first aggregation information and the second aggregation information that is separately sent by the plurality of second servers, the global model stored on the first server, to obtain the updated global model.

10. A computer-readable storage medium, comprising a program, which, when executed by a federated learning system, causes the federated learning system to carry out the method according to any one of claims 1-7, wherein the federated learning system comprises a plurality of servers and a plurality of clients.

11. A computer program product, wherein the computer program product comprises software code, which, when executed by a federated learning system, causes the federated learning system to carry out the method according to any one of claims 1-7, wherein the federated learning system comprises a plurality of servers and a plurality of clients.

**Patentansprüche**

1. Föderiertes Lernverfahren, das durch eine Vielzahl von Servern eines föderierten Lernsystems durchgeführt wird, wobei das föderierte Lernsystem die Vielzahl von Servern und eine Vielzahl von Clients umfasst, die Vielzahl von Servern einen ersten Server und einen zweiten Server umfasst und die Vielzahl von Servern dazu konfiguriert ist, das föderierte Lernverfahren durchzuführen, wobei das Verfahren einen iterativen Lernprozess umfasst und in einer beliebigen Iterationsrunde das Verfahren Folgendes umfasst:

Empfangen (401) einer Anforderungsnachricht, die durch mindestens einen ersten Client der Vielzahl von Clients gesendet wird, durch den ersten Server, wobei die Anforderungsnachricht dazu verwendet wird, ein in dem ersten Server gespeichertes globales Modell anzufordern;

Senden (402) eines Trainingskonfigurationsparameters und von Informationen über das globale Modell durch den ersten Server an den mindestens einen ersten Client;

Empfangen (404) von ersten Modellaktualisierungsparametern durch den ersten Server, die separat durch den mindestens einen ersten Client zurückgeführt werden, wobei die ersten Modellaktualisierungsparameter Parameter eines globalen Modells sind, das durch den mindestens einen ersten Client trainiert wird;

Aggregieren (405) der ersten Modellaktualisierungsparameter, die durch den mindestens einen ersten Client zurückgeführt werden, durch den ersten Server, um erste Aggregationsinformationen in einer aktuellen Iterationsrunde zu erlangen;

Erlangen (406) von zweiten Aggregationsinformationen, die durch den zweiten Server gesendet werden, durch den ersten Server, wobei die zweiten Aggregationsinformationen Informationen sind, die durch den zweiten Server durch Aggregieren empfangener zweiter Modellaktualisierungsparameter in der aktuellen Iterationsrunde erlangt werden; und

Aktualisieren (408) des auf dem ersten Server gespeicherten globalen Modells durch den ersten Server basierend auf den ersten Aggregationsinformationen und den zweiten Aggregationsinformationen, um das aktualisierte globale Modell zu erlangen;

wobei der erste Server ein primärer Knoten in dem föderierten Lernsystem ist, der primäre Knoten dazu konfiguriert ist, die Vielzahl von Servern zu verwalten, und das Erlangen (401) von zweiten Aggregationsinformationen, die durch den zweiten Server gesendet werden, durch den ersten Server ferner Folgendes umfasst:

Senden einer ersten Auslöserangabe durch den ersten Server an den zweiten Server, wobei die erste Auslöserangabe dem zweiten Server angibt, die zweiten Aggregationsinformationen an den ersten Server zu senden; und

Empfangen der zweiten Aggregationsinformationen von dem zweiten Server durch den ersten Server; wobei ein Zähler in dem ersten Server angeordnet ist, der Zähler dazu konfiguriert ist, die durch die Vielzahl von Servern in der einen Iterationsrunde empfangenen Anforderungsnachrichten zu zählen, und das Senden einer ersten Auslöserangabe durch den ersten Server an den zweiten Server Folgendes umfasst: wenn ein Wert des Zählers einen ersten Schwellenwert erfüllt, Senden der ersten Auslöserangabe durch den ersten Server an den zweiten Server.

2. Verfahren gemäß Anspruch 1, wobei die Vielzahl von Servern eine Vielzahl von zweiten Servern umfasst und das Erlangen von zweiten Aggregationsinformationen, die durch den zweiten Server gesendet wird, durch den ersten Server Folgendes umfasst:

Empfangen der zweiten Aggregationsinformationen, die durch die Vielzahl von zweiten Servern separat gesendet werden, durch den ersten Server; und

das Aktualisieren (408) des auf dem ersten Server gespeicherten globalen Modells durch den ersten Server basierend auf den ersten Aggregationsinformationen und den zweiten Aggregationsinformationen, um das aktualisierte globale Modell zu erlangen, Folgendes umfasst:

Aktualisieren des auf dem ersten Server gespeicherten globalen Modells durch den ersten Server basierend auf den ersten Aggregationsinformationen und den zweiten Aggregationsinformationen, die separat durch die Vielzahl von zweiten Servern gesendet werden, um das aktualisierte globale Modell zu erlangen.

3. Verfahren gemäß Anspruch 1 oder 2, wobei der erste Schwellenwert ein voreingestellter Wert ist oder sich der erste Schwellenwert auf die Anzahl von Clients bezieht, die auf das föderierte Lernsystem in einem Prozess einer vorherigen Iterationsrunde zugreifen.

4. Verfahren gemäß einem der Ansprüche 1 bis 3, wobei der primäre Knoten einen Zeitgeber umfasst, der Zeitgeber die Zeitmessung startet, nachdem eine erste Anforderungsnachricht in jeder Iterationsrunde empfangen wird, und das Verfahren ferner Folgendes umfasst:

wenn ein Wert des Zeitgebers einen zweiten Schwellenwert überschreitet, Senden einer zweiten Auslöserangabe durch den ersten Server an den zweiten Server, wobei die zweite Auslöserangabe den zweiten Server angibt, eine nächste Iterationsrunde durchzuführen.

5. Verfahren gemäß Anspruch 4, wobei der zweite Schwellenwert ein voreingestellter Wert ist, sich der zweite Schwellenwert auf die Anzahl der Clients bezieht, die in der vorherigen Iterationsrunde auf das föderierte Lernsystem zugreifen, oder sich der zweite Schwellenwert auf einen Wert einer Datenmenge für die Kommunikation in der vorherigen Iterationsrunde zwischen jedem Server in dem föderierten Lernsystem und einem entsprechenden Client bezieht.

6. Verfahren gemäß einem der Ansprüche 1 bis 5, wobei das Verfahren ferner Folgendes umfasst:

Empfangen (409) einer durch einen dritten Client gesendeten Abfragenachricht durch den ersten Server, wobei der dritte Client einen beliebigen Client umfasst, der auf das föderierte Lernsystem zugreift; und

Senden (410) von Informationen über das aktualisierte globale Modell durch den ersten Server an den dritten Client entsprechend der Abfragenachricht.

7. Verfahren gemäß einem der Ansprüche 1 bis 6, wobei das Verfahren ferner Folgendes umfasst:
Senden der ersten Aggregationsinformationen durch den ersten Server an den zweiten Server, damit der zweite Server basierend auf den ersten Aggregationsinformationen und den zweiten Aggregationsinformationen das lokal gespeicherte globale Modell aktualisieren kann, um das aktualisierte globale Modell zu erlangen.

8. Föderiertes Lernsystem, das eine Vielzahl von Servern und eine Vielzahl von Clients umfasst, wobei die Vielzahl von Servern einen ersten Server und einen zweiten Server umfasst, sowohl der erste Server als auch der zweite Server Informationen über ein globales Modell speichern, die Vielzahl von Servern dazu konfiguriert ist, ein föderiertes Lernverfahren durchzuführen, wobei das Verfahren einen iterativen Lernprozess umfasst, und in einer beliebigen Iterationsrunde:

der erste Server dazu konfiguriert ist, eine durch mindestens einen ersten Client der Vielzahl von Clients separat gesendete Anforderungsnachricht zu empfangen, wobei die Anforderungsnachricht dazu verwendet wird, ein in dem ersten Server gespeichertes globales Modell anzufordern;
der erste Server dazu konfiguriert ist, für die durch den mindestens einen ersten Client separat gesendete Anforderungsnachricht einen Trainingskonfigurationsparameter und die Informationen über das globale Modell an den mindestens einen ersten Client zu senden;
der erste Server dazu konfiguriert ist, erste Modellaktualisierungsparameter zu empfangen, die separat durch den mindestens einen ersten Client zurückgeführt werden, wobei die ersten Modellaktualisierungsparameter Parameter des globalen Modells sind, die durch Trainieren durch den mindestens einen ersten Client erlangt werden;
der erste Server dazu konfiguriert ist, die ersten Modellaktualisierungsparameter zu aggregieren, die separat durch den mindestens einen ersten Client zurückgeführt werden, um erste Aggregationsinformationen zu erlangen;
der zweite Server dazu konfiguriert ist: zweite Modellaktualisierungsparameter, die durch mindestens einen entsprechenden zweiten Client der Vielzahl von Clients gesendet werden, zu empfangen, und die zweiten Modellaktualisierungsparameter, die durch den mindestens einen zweiten Client gesendet werden, zu aggregieren, um zweite Aggregationsinformationen zu erlangen;
der erste Server dazu konfiguriert ist, zweite Aggregationsinformationen zu erlangen, die durch den zweiten Server gesendet werden; und
der erste Server dazu konfiguriert ist, basierend auf den ersten Aggregationsinformationen und den zweiten Aggregationsinformationen, die durch den zweiten Server gesendet werden, das auf dem ersten Server gespeicherte globale Modell zu aktualisieren, um das aktualisierte globale Modell zu erlangen;
wobei der erste Server ein primärer Knoten in dem föderierten Lernsystem ist, der primäre Knoten dazu konfiguriert ist, die Vielzahl von Servern zu verwalten, und der erste Server dazu konfiguriert ist, die durch den zweiten Server gesendeten zweiten Aggregationsinformationen zu erlangen durch: Senden einer ersten Auslöserangabe an den zweiten Server, wobei die erste Auslöserangabe dem zweiten Server angibt, die zweiten Aggregationsinformationen an den ersten Server zu senden; und Empfangen der zweiten Aggregationsinformationen von dem zweiten Server;
wobei ein Zähler in dem ersten Server angeordnet ist, der Zähler dazu konfiguriert ist, die durch die Vielzahl von Servern in der einen Iterationsrunde empfangenen Anforderungsnachrichten zu zählen, und der erste Server ferner dazu konfiguriert ist, die erste Auslöserangabe an den zweiten Server zu senden, wenn ein Wert des Zählers einen ersten Schwellenwert erreicht.

9. System gemäß Anspruch 8, wobei die Vielzahl von Servern eine Vielzahl von zweiten Servern umfasst;
jeder der Vielzahl von zweiten Servern dazu konfiguriert ist:

die zweiten Modellaktualisierungsparameter, die durch den mindestens einen entsprechenden zweiten Client gesendet werden, zu empfangen und die zweiten Modellaktualisierungsparameter, die durch den mindestens einen zweiten Client gesendet werden, zu aggregieren, um die zweiten Aggregationsinformationen zu erlangen;
der erste Server speziell dazu konfiguriert ist, die zweiten Aggregationsinformationen zu empfangen, die separat durch die Vielzahl von zweiten Servern gesendet werden; und
der erste Server speziell dazu konfiguriert ist, basierend auf den ersten Aggregationsinformationen und den zweiten Aggregationsinformationen, die separat durch die Vielzahl von zweiten Servern gesendet werden, das auf dem ersten Server gespeicherte globale Modell zu aktualisieren, um das aktualisierte globale Modell zu erlangen.

10. Computerlesbares Speichermedium, umfassend ein Programm, das, wenn es durch ein föderiertes Lernsystem ausgeführt wird, das föderierte Lernsystem veranlasst, das Verfahren gemäß einem der Ansprüche 1-7 durchzuführen, wobei das föderierte Lernsystem eine Vielzahl von Servern und eine Vielzahl von Clients umfasst.

11. Computerprogrammprodukt, wobei das Computerprogrammprodukt Softwarecode umfasst, der, wenn er durch ein föderiertes Lernsystem ausgeführt wird, das föderierte Lernsystem veranlasst, das Verfahren gemäß einem der Ansprüche 1-7 durchzuführen, wobei das föderierte Lernsystem eine Vielzahl von Servern und eine Vielzahl von Clients umfasst.

## Revendications

1. Procédé d'apprentissage fédéré réalisé par une pluralité de serveurs d'un système d'apprentissage fédéré, dans lequel le système d'apprentissage fédéré comprend la pluralité de serveurs et une pluralité de clients, la pluralité de serveurs comprend un premier serveur et un second serveur, et la pluralité de serveurs sont configurés pour réaliser le procédé d'apprentissage fédéré, le procédé comprenant un processus d'apprentissage itératif, et dans chaque cycle d'itération, le procédé comprend :

   la réception (401), par le premier serveur, d'un message de requête envoyé par au moins un premier client de la pluralité de clients, dans lequel le message de requête est utilisé pour demander un modèle global stocké dans le premier serveur ;
   l'envoi (402), par le premier serveur, d'un paramètre de configuration d'entraînement et d'informations sur le modèle global à l'au moins un premier client ;
   la réception (404), par le premier serveur, de premiers paramètres de mise à jour de modèle renvoyés séparément par l'au moins un premier client, dans lequel les premiers paramètres de mise à jour de modèle sont des paramètres d'un modèle global entraîné par l'au moins un premier client ;
   l'agrégation (405), par le premier serveur, des premiers paramètres de mise à jour de modèle renvoyés par l'au moins un premier client, pour obtenir des premières informations d'agrégation dans un cycle d'itération actuel ;
   l'obtention (406), par le premier serveur, de secondes informations d'agrégation envoyées par le second serveur, dans lequel les secondes informations d'agrégation sont des informations obtenues par le second serveur en agrégeant les seconds paramètres de mise à jour de modèle reçus dans le cycle d'itération actuel ; et
   la mise à jour (408), par le premier serveur sur la base des premières informations d'agrégation et des secondes informations d'agrégation, du modèle global stocké sur le premier serveur, pour obtenir le modèle global mis à jour ;
   dans lequel le premier serveur est un nœud principal du système d'apprentissage fédéré, le nœud principal est configuré pour gérer la pluralité de serveurs, et l'obtention (401), par le premier serveur, de secondes informations d'agrégation envoyées par le second serveur comprend également :

      l'envoi, par le premier serveur, d'une première indication de déclenchement au second serveur, dans lequel la première indication de déclenchement indique au second serveur d'envoyer les secondes informations d'agrégation au premier serveur ; et
      la réception, par le premier serveur, des secondes informations d'agrégation provenant du second serveur ;
      dans lequel un compteur est disposé dans le premier serveur, le compteur est configuré pour compter les messages de requête reçus par la pluralité de serveurs dans un cycle d'itération, et l'envoi, par le premier serveur, d'une première indication de déclenchement au second serveur comprend :
      lorsqu'une valeur du compteur atteint un premier seuil, l'envoi, par le premier serveur, de la première indication de déclenchement au second serveur.

2. Procédé selon la revendication 1, dans lequel la pluralité de serveurs comprend une pluralité de seconds serveurs, et l'obtention, par le premier serveur, de secondes informations d'agrégation envoyées par le second serveur comprend :

   la réception, par le premier serveur, des secondes informations d'agrégation envoyées séparément par la pluralité de seconds serveurs ; et
   la mise à jour (408), par le premier serveur sur la base des premières informations d'agrégation et des secondes informations d'agrégation, du modèle global stocké sur le premier serveur, pour obtenir le modèle global mis à jour comprend :

la mise à jour, par le premier serveur sur la base des premières informations d'agrégation et des secondes informations d'agrégation qui sont envoyées séparément par la pluralité de seconds serveurs, du modèle global stocké sur le premier serveur, pour obtenir le modèle global mis à jour.

**3.** Procédé selon la revendication 1 ou 2, dans lequel le premier seuil est une valeur prédéfinie, ou le premier seuil est lié à une quantité de clients qui accèdent au système d'apprentissage fédéré dans un processus d'un cycle d'itération précédent.

**4.** Procédé selon l'une quelconque des revendications 1 à 3, dans lequel le nœud principal comprend un minuteur, le minuteur démarre après la réception d'un premier message de requête à chaque cycle d'itération, et le procédé comprend également :

lorsqu'une valeur du minuteur dépasse un second seuil, l'envoi, par le premier serveur, d'une seconde indication de déclenchement au second serveur, dans lequel la seconde indication de déclenchement indique au second serveur de réaliser un nouveau cycle d'itération.

**5.** Procédé selon la revendication 4, dans lequel le second seuil est une valeur prédéfinie, le second seuil est lié à la quantité de clients qui accèdent au système d'apprentissage fédéré dans le cycle d'itération précédent, ou le second seuil est lié à une valeur de la quantité de données de communication, dans le cycle d'itération précédent, entre chaque serveur dans système d'apprentissage fédéré et un client correspondant.

**6.** Procédé selon l'une quelconque des revendications 1 à 5, dans lequel le procédé comprend également :

la réception (409), par le premier serveur, d'un message d'interrogation envoyé par un troisième client, dans lequel le troisième client comprend n'importe quel client qui accède au système d'apprentissage fédéré ; et l'envoi (410), par le premier serveur, d'informations sur le modèle global mis à jour au troisième client correspondant au message d'interrogation.

**7.** Procédé selon l'une quelconque des revendications 1 à 6, dans lequel le procédé comprend également :

l'envoi, par le premier serveur, de premières informations d'agrégation au second serveur, pour permettre au second serveur de mettre à jour, sur la base des premières informations d'agrégation et des secondes informations d'agrégation, le modèle global stocké localement pour obtenir le modèle global mis à jour.

**8.** Système d'apprentissage fédéré, comprenant une pluralité de serveurs et une pluralité de clients, dans lequel la pluralité de serveurs comprend un premier serveur et un second serveur, le premier serveur et le second serveur stockent des informations sur un modèle global, la pluralité de serveurs sont configurés pour réaliser un procédé d'apprentissage fédéré, la procédé comprenant un processus d'apprentissage itératif, et dans chaque cycle d'itération :

le premier serveur est configuré pour recevoir un message de requête envoyé séparément par au moins un premier client de la pluralité de clients, dans lequel le message de requête est utilisé pour demander un modèle global stocké dans le premier serveur ;
le premier serveur est configuré pour envoyer, pour le message de requête envoyé séparément par l'au moins un premier client, un paramètre de configuration d'entraînement et les informations sur le modèle global à l'au moins un premier client ;
le premier serveur est configuré pour recevoir des premiers paramètres de mise à jour de modèle renvoyés séparément par l'au moins un premier client, dans lequel les premiers paramètres de mise à jour de modèle sont des paramètres du modèle global obtenus par entraînement par l'au moins un premier client ;
le premier serveur est configuré pour agréger les premiers paramètres de mise à jour de modèle renvoyés séparément par l'au moins un premier client, pour obtenir les premières informations d'agrégation ;
le second serveur est configuré pour : recevoir des seconds paramètres de mise à jour de modèle envoyés par au moins un deuxième client correspondant de la pluralité de clients,
et agréger les seconds paramètres de mise à jour de modèle envoyés par l'au moins un deuxième client, pour obtenir des secondes informations d'agrégation ;
le premier serveur est configuré pour obtenir des secondes informations d'agrégation envoyées par le second serveur ; et
le premier serveur est configuré pour mettre à jour, sur la base des premières informations d'agrégation et des secondes informations d'agrégation qui sont envoyées par le second serveur, le modèle global stocké sur le premier serveur, pour obtenir le modèle global mis à jour ;

dans lequel le premier serveur est un nœud principal dans le système d'apprentissage fédéré, le nœud principal est configuré pour gérer la pluralité de serveurs, et le premier serveur est configuré pour obtenir les secondes informations d'agrégation envoyées par le second serveur en : envoyant une première indication de déclenchement au second serveur, dans lequel la première indication de déclenchement indique au second serveur d'envoyer les secondes informations d'agrégation au premier serveur ; et en recevant les secondes informations d'agrégation du second serveur ;

dans lequel un compteur est disposé dans le premier serveur, le compteur est configuré pour compter les messages de requête reçus par la pluralité de serveurs dans un cycle d'itération, et le premier serveur est également configuré pour envoyer la première indication de déclenchement au second serveur lorsqu'une valeur du compteur atteint un premier seuil.

9. Système selon la revendication 8, dans lequel il existe une pluralité de seconds serveurs compris dans la pluralité de serveurs ;

chacun de la pluralité de seconds serveurs est configuré pour :

recevoir les seconds paramètres de mise à jour de modèle envoyés par l'au moins un deuxième client correspondant, et agréger les seconds paramètres de mise à jour de modèle envoyés par l'au moins un deuxième client, pour obtenir les secondes informations d'agrégation ;

le premier serveur est spécifiquement configuré pour recevoir les secondes informations d'agrégation envoyées séparément par la pluralité de seconds serveurs ; et

le premier serveur est spécifiquement configuré pour mettre à jour, sur la base des premières informations d'agrégation et des secondes informations d'agrégation qui sont envoyées séparément par la pluralité de seconds serveurs, le modèle global stocké sur le premier serveur, pour obtenir le modèle global mis à jour.

10. Support de stockage lisible par ordinateur, comprenant un programme qui, lorsqu'il est exécuté par un système d'apprentissage fédéré, amène le système d'apprentissage fédéré à mettre en œuvre le procédé selon l'une quelconque des revendications 1 à 7, dans lequel le système d'apprentissage fédéré comprend une pluralité de serveurs et une pluralité de clients.

11. Produit de programme informatique, dans lequel le produit de programme informatique comprend un code logiciel qui, lorsqu'il est exécuté par un système d'apprentissage fédéré, amène le système d'apprentissage fédéré à mettre en œuvre le procédé selon l'une quelconque des revendications 1 à 7, dans lequel le système d'apprentissage fédéré comprend une pluralité de serveurs et une pluralité de clients.

IT value chain

Intelligent information chain

Intelligent product and industry application

Translation/ Text analysis/...

Voice/Visual/Image/...

Data processing:

Data training/Machine learning/ Deep learning

Searching/ Inference/ Decision-making

...

Data

Infrastructure

Sensor

Intelligent chip

Base platform

...

FIG. 1

FIG. 2

FIG. 3

| Client | First server | Second server |
|---|---|---|

401

Request message

402

Training configuration
parameter and global model

403

Train the global model
by using the training
configuration
parameter

404

Model update parameters

405

Aggregate the model update
parameters to obtain first
aggregation information

406

Second aggregation
information

407

Aggregate the first aggregation
information and the second
aggregation information to
obtain third aggregation
information

408

Update the stored global model

409

Query message

410

Updated global model

FIG. 4

Scheduler
FL-scheduler

FL-server 0

TCP

HTTP

FL-server 1

TCP

HTTP

FL-server 2

TCP

HTTP

FL-client

FL-client

FL-client

HTTP
communication

Proprietary
TCP protocol
communication

TCP
port

HTTP
port

FIG. 5

FIG. 6

Initialize a timer and a counter — 701

An FL-server receives a request message of an FL-client — 702

The counter performs accumulation — 703

Whether a value of the counter is 1 — 704

Trigger the timer to perform timing — 708

Yes

No

FL-servers process requests and synchronize data in a cluster dimension — 705

Whether timeout occurs — 709

The FL-servers perform aggregation — 706

Yes

Stop timing — 710

Whether a count reaches a first threshold — 707

No

Yes

FIG. 7

FIG. 8

FIG. 9

EP 4 318 338 B1

Server

Startup module — 1001

Transceiver module — 1002

## FIG. 10

1100

Server

1122 — Central processing unit

Power supply

1126

Operating system — 1141

Data — 1144

Application program — 1142

Storage medium — 1130

Memory — 1132

Wired or wireless network interface — 1150

Input/Output interface — 1158

## FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LATIF U KFIAN et al.** Dispersed Federated Learning: Vision, Taxonomy, and Future Directions. *ARXI-VORG, arXiv: 2008.05189v1*